# EUROPÄISCHE PATENTSCHRIFT

(11) **EP 2 191 341 B1**
(45) Veröffentlichungstag und Bekanntmachung des Hinweises auf die Patenterteilung: **18.11.2015**
(21) Anmeldenummer: 08785359.4
(22) Anmeldetag: 05.08.2008
(51) Int. Cl.: G05D 16/20

(54) **STOFFTRANSPORT UND EREIGNISKONTROLLE IN SYSTEMEN MIT PIEZOELEKTRISCH AKTIVIERTER TRÖPFCHENEMISSION UND KOMBINATIONSMÖGLICHKEITEN VON TRÄGERMATRIX UND ZU DOSIERENDEM STOFF**
MATERIAL TRANSPORT AND EVENT MONITORING IN SYSTEMS FEATURING PIEZOELECTRICALLY ACTIVATED EMISSION OF DROPLETS, AND POSSIBLE COMBINATIONS OF A MATRIX AND MATERIAL TO BE METERED
TRANSPORT DE SUBSTANCE ET CONTRÔLE D'ÉVÉNEMENT DANS UN SYSTÈME AVEC ÉMISSION DE GOUTTELETTES ACTIVÉE PIÉZOÉLECTRIQUEMENT ET POSSIBILITÉS DE COMBINAISON DE MATRICES DE SUPPORT ET DE SUBSTANCE À DOSER

(30) Priorität: 08.08.2007 DE 102007038278
(43) Veröffentlichungstag der Anmeldung: 02.06.2010
(73) Patentinhaber: Fraunhofer-Gesellschaft zur Förderung der angewandten Forschung e.V., 80686 München (DE)
(72) Erfinder: BREUER, Klaus, 83229 Aschau (DE); MAIR, Stefan, 83714 Wachlehen (DE)
(74) Vertreter: Pfenning, Meinig & Partner GbR
(86) Internationale Anmeldenummer: PCT/EP2008/006434
(87) Internationale Veröffentlichungsnummer: WO 2009/018999

(56) Entgegenhaltungen:
- US-A- 5 339 673
- US-A- 5 637 787
- US-A1- 2004 149 012

## Beschreibung

Die vorliegende Erfindung bezieht sich auf eine Vorrichtung sowie auf ein Verfahren zum Zudosieren eines insbesondere in flüssiger Form vorliegenden Stoffes in eine Trägermatrix, insbesondere in einen Gasstrom. Die bei dem Verfahren bzw. bei der Vorrichtung verwendete Dosiereinheit zum Zudosieren des Stoffes in die Trägermatrix ist hierbei vorteilhafterweise zur piezoelektrisch aktivierten Tröpfchenemission ausgebildet.

Die WO 2005/052571 A2 beschreibt ein System zum Erzeugen eines Referenzgases durch Verdampfen einer Flüssigkeit im besagten Gas. Das System umfasst eine Gasleitung, eine Verdampfungskammer, die wiederum einen Mikrotropfengenerator umfasst und durch die Gasleitung angeströmt wird. Der Mikrotropfengenerator ist von einem Typ, mit dem Mikrotropfen erzeugt werden und in gesteuerter Form durch eine Menge von Erzeugungselementen geführt werden.

Die US 2004/0149012 beschreibt ein System zum Zudosieren eines Stoffes in eine Träger matrix, wobei während des Dosierens der Druch im Dosierraum konstant gehalten wird.

In vielen Bereichen der chemischen Analytik, aber auch bei Produktionsprozessen ist es oftmals wichtig, kleinste, dabei stabile und reproduzierbare Konzentrationen eines oder mehrerer Stoffe in eine Trägermatrix, z.B. einen Gasstrom oder ein Gasvolumen zuzudosieren. Hierzu werden nach dem Stand der Technik meist Prüfgase eingesetzt, welche durch Einwiegen der entsprechenden Stoffe in ein definiertes Gasvolumen hergestellt werden. Dieses Verfahren ist in der Produktion und insbesondere in der Qualitätssicherung langwierig, da die Langzeitstabilität garantiert werden muss. Auch müssen oftmals aus produktionstechnischen Gründen im Vergleich mit der tatsächlich benötigten Menge große Volumina hergestellt werden.

Weitere Verfahren, die die Prinzipien der Verdampfung und der Permeation ausnützen kommen ebenfalls zum Einsatz. Diese Verfahren haben den Nachteil, dass sie in der Regel nicht für Stoffmischungen angewendet werden können. Auch müssen die Randbedingungen sehr exakt kontrolliert werden, um allzu große Schwankungen der emittierten Stoffmenge zu vermeiden.

Aus diesen Gründen wird immer mehr dazu übergegangen, die benötigten Stoffflüsse direkt durch piezoelektrisch aktivierte Tröpfchenemission zu erzeugen. Solche Verfahren werden beispielsweise in den Patenten US 2002139167 und WO 2005/052571 beschrieben. Die grundsätzliche Anordnung für eine derartige Anlage besteht aus einem Vorratsgefäß, in welchem der zu dosierende Stoff bevorratet ist und einem Dosierkopf, ähnlich jenen, die in Tintenstrahldruckern eingesetzt werden, aus welchem die Tröpfchen durch piezoelektrisch induzierte Kontraktion emittiert werden. Das Vorratsgefäß und der Dosierkopf sind über eine Kapillare miteinander verbunden. In dieser wird der zuzudosierende Stoff zum Dosierkopf transportiert. Der Dosierkopf ist in der Regel in einer Anordnung platziert, welche die korrekte Führung des Trägermatrixstromes ermöglicht, in welchen der zuzudosierende Stoff eingebracht wird. Unter dem Dosierraum wird im Folgenden der den Dosierkopf umgebende Luftraum verstanden, in den die Tröpfchen aus dem Dosierkopf emittiert werden. Welches Volumen der Dosierraum genau einnimmt ist je nach Systemanordnung verschieden. Unter einem zuzudosierenden Stoff wird im folgenden ein einzelner Stoff (nachfolgend auch als Einzelstoff bezeichnet) ebenso wie ein Stoffgemisch, also ein Gemisch aus verschiedenen Einzelstoffen verstanden.

Im vorstehend genannten Stand der Technik wird vorgeschlagen, die Menge an eingebrachtem Stoff durch Vorversuche gravimetrisch zu ermitteln. Dieses Verfahren birgt jedoch ein erhebliches Fehlerrisiko, etwa durch die Variation der Tröpfchengröße, welche insbesondere nach Ausschalten und erneuter Inbetriebnahme auftreten kann, oder durch Wandeffekte. Zusätzlich sind erhebliche Wäägefehler bei den in der Regel kleinen verwendeten Mengen zu erwarten. Auch kann nicht schnell von einem zuzudosierenden Stoff auf einen anderen gewechselt werden, da vorab immer eine Massenflussbestimmung durchgeführt werden muss. Die Praxis zeigt auch, dass die aus der Dosiereinrichtung abgegebenen Tröpfchen im Verlauf einer Dosierung, insbesonderte wenn diese länger andauert, in ihrer Größe systematisch variieren können, womit auch der Massenfluss an zuzudosierendem Stoff variiert. Oftmals ist es auch gewünscht, verschiedene Massenflüsse in relativ kleinem Zeitabstand zu realisieren. Dies ist mit dem vorstehend genannten Stand der Technik nicht möglich, oder bedarf zumindest einer erheblich zeitaufwändigen Vorbereitung.

In dem vorstehend genannten Stand der Technik werden die Tröpfchen des zuzudosierenden Stoffes in einen Gasstrom eingebracht. Dabei sind entweder der zugeführte Gasstrom oder die Fläche auf die die Tröpfchen auftreffen beheizt, um eine vollständige Verdampfung zu gewährleisten. Zu Beginn eines Dosiervorganges muss die Flüssigkeitszuleitung zu dem Dosierkopf mit zuzudosierendem Stoff gespült werden. Dadurch wird im Vergleich mit dem späteren Betrieb eine große Menge an zuzudosierender Substanz in das System eingebracht. Diese kann mit dem Trägergasstrom durch das System ausgetragen werden. Dieses Vorgehen birgt die Gefahr, dass sich die gesamten Wandungen des Systems mit zuzudosierendem Stoff übersättigen und diesen dann im eigentlichen Betrieb langsam und unkontrolliert wieder an das Trägergas abgeben, was eine systematisch zu hohe Konzentration von zuzudosierendem Stoff im Betrieb bewirkt.

Die Vorrichtungen nach dem genannten Stand der Technik sehen zudem die direkte Verwertung des beladenen Trägergasstromes vor. D.h. der Trägergasstrom wird ohne weitere Verdünnung an den Punkt der Nutzung geleitet, im Fall von US 2002139167 einer Kalibriereinrichtung und bei WO 2005/052571 einer Prüfkammer für Feuchtesensoren. Bei den beschriebenen Anwendungen ist festzuhalten, dass aufgrund der beschränkten Frequenz der Tröpfchenemission, der beschränkten Tröpfchengröße und des in der Regel beschränkten Trägergasflusses auch die resultierenden Konzentrationen limitiert sind. Die Konzentration an zu dosierendem Stoff in der trägermatrix kann auch durch Verdünnung des zu dosierenden Stoffes direkt geschehen, etwa durch Herstellung einer ethanolischen Lösung. Oftmals ist es jedoch nicht gewünscht, dass ein anderer Stoff der Trägermatrix zugegeben wird, der z.B. bei olfaktorischen Untersuchungen neben dem zu dosierenden Stoff ebenfalls wahrgenommen werden würde. Es kann also durchaus sinnvoll sein, den zu dosierenden Stoff als Mischung zu konzipieren.

Aufgabe der vorliegenden Erfindung ist es nun, die bestehenden Vorrichtungen, insbesondere solche Vorrichtungen, welche auf piezoelektrisch aktivierter Tröpfchenemission basiert sind (sowie die entsprechenden Verfahren) dahingehend zu verbessern, dass auf einfache, reproduzierbare und kontrollierte Art und Weise der Trägermatrix genau eine gewünschte Stoffmenge zusetzbar ist. Aufgabe der vorliegenden Erfindung ist es darüberhinaus, geeignete Maßnahmen und Anordnungen zur Verfügung zu stellen, um einen kontrollierten und reproduzierbaren Transport von zu dosierendem Stoff zu ermöglichen und die kontrollierte Beladung und Führung des Trägermatrixstroms durchzuführen.

Diese Aufgabe wird durch eine Vorrichtung gemäß Patentanspruch 1 gelöst. Vorteilhafte erfindungsgemäße Weiterbildungen dieser Vorrichtung lassen sich den jeweiligen abhängigen Ansprüchen entnehmen. Ein entsprechendes Verfahren ist Anspruch 13 zu entnehmen; die erfindungsgemäße Verwendung ist in Anspruch 14 beschrieben.

Nachfolgend werden nun zunächst die Grundlagen der vorliegenden Erfindung beschrieben. Sodann schließt sich eine kurze Beschreibung einzelner Ausgestaltungsformen der vorliegenden Erfindung an, gefolgt von einer ausführlichen Beschreibung von verschiedenen Ausführungsbeispielen der Erfindung.

Die einzelnen erfindungsgemäßen Ausführungsbeispiele bzw. einzelne erfindungsgemäße Merkmale der vorgestellten Beispiele können hierbei nicht nur in einer Kombination, wie sie in den speziellen vorteilhaften Ausführungsbeispielen gezeigt ist, auftreten, sondern können auch im Rahmen der vorliegenden Erfindung in beliebigen anderen Kombinationsmöglichkeiten ausgebildet sein oder verwendet werden.

Ein wesentlicher Aspekt der Lösung der erfindungsgemäßen Aufgabe basiert auf der Betrachtung der physikalischen Gegebenheiten bei der Dosierung, insbesondere auf der Betrachtung der unterschiedlichen, in einer Dosiervorrichtung auftretenden Drücke bzw. Druckereignisse: Aufgrund verschiedener Aktionen, bzw. physikalischen Gegebenheiten treten an verschiedenen Teilen der Anordnung unterschiedliche Drücke auf. Diese werden erfindungsgemäß für einen korrekten und reproduzierbaren Dosiervorgang kontrolliert und ggf. geregelt bzw. beeinflusst. Es sind erfindungsgemäß insbesondere von Interesse:
- Der Druck, welcher im Vorratsgefäß in der Gasphase über dem zu dosierenden Stoff anliegt (p_{G})
- Der Druck, welcher im Dosierraum herrscht (p_{R})
- Der Druck, der aus dem Niveauunterschied zwischen dem Flüssigkeitsspiegel im Vorratsgefäß und dem Austrittspunkt der Tröpfchen resultiert (Δp_{L}).

Um einen konstanten Dosiervorgang zu gewährleisten, sollte vorteilhafterweise während der Dosierung sowohl p_{G}-p_{R}, als auch Δp_{L} konstant gehalten werden, wobei Δp_{L} in der Regel viel kleiner ist als die Differenz zwischen p_{G} und P_{R}. Die einzelnen Drücke, Druckverhältnisse und/oder Druckdifferenzen können variieren und können für die jeweilige zu dosierende Substanz unter Berücksichtigung des Gesamtsystems über Vorversuche ermittelt werden.

Der Dosierraum kann in der Regel nicht völlig ohne Differenzdruck zur Umgebung gehalten werden, da durch ihn hindurch z.B. ein Gasstrom geführt wird, welcher mit zu dosierendem Stoff beaufschlagt wird. An den Ort der Tröpfchenemission anschließend folgt in der Regel eine Apparatur, welche der Nutzung des beaufschlagten Gases dient. Diese stellt einen Strömungswiderstand dar, der durch einen entsprechenden Vordruck am Ort der Tröpfchenemission überwunden werden muss. Dieser Druck kann variieren, etwa durch Variation des Vordrucks vor dem Dosierraum, oder durch die insbesondere beim Startvorgang eingebrachte Menge zu dosierenden Stoffes, welcher aufgrund der in dem Dosierraum eingestellten Temperatur schlagartig verdampfen kann. Auch kann es möglich sein, dass der Druck in dem Dosierraum nicht genau bekannt ist, da die folgende Apparatur, welche der Nutzung des beaufschlagten Gases dient einen unbekannten Luftwiderstand hat. Aus den genannten Gründen ist es vorteilhaft, für einen Druckausgleich zwischen Vorratsgefäß und Dosierraum zu sorgen.

Zwischen dem Austrittspunkt der Tröpfchen am Dosierkopf und dem Vorratsgefäß muss eine konstante, nicht kurzfristig schwankende Druckdifferenz überwunden werden, um einen geeigneten Fluss des zu dosierenden Stoffes zu gewährleisten. Diese resultiert aus dem Strömungswiderstand den die Kapillare der zu dosierenden Substanz entgegensetzt und aus der Oberflächenspannung der zu dosierenden Substanz, die bei der Tröpfchenemission an der Spitze des Dosierkopfes überwunden werden muss. Dies geschieht zwar hauptsächlich aufgrund der Druckerzeugung durch die Piezoeinheit, doch zeigen Versuche, dass ein gezieltes Erhöhen der Druckdifferenz die Tröpfchenemission fördern kann. Dies ist für jeden zu dosierenden Stoff zu überprüfen. Bei länger dauernden Dosiervorgängen fällt der Flüssigkeitsspiegel im Vorratsgefäß ab. Dadurch verringert sich die beschriebene Druckdifferenz. Dies muss zur Aufrechterhaltung einer konstanten Dosierung ausgeglichen werden.

Zum Starten und Beenden des Dosiervorgangs ist es nötig die Kapillare zu füllen, bzw. zu entleeren. Dabei gilt: p_{G} >> p_{R} (Befüllen der Kapillare) und p_{G} << p_{R} (Entleeren der Kapillare). Da die auftretenden Druckdifferenzen zwischen p_{G} und p_{V} viel größer sind als Δp_{L} kann diese Größe bei Befüll- und Entleerungsvorgängen vernachlässigt werden.

Zu Beginn eines Dosiervorganges muss die Leitung bzw. Kapillare zwischen Vorratsgefäß und Dosierkopf mit dem zu dosierenden Stoff gefüllt werden. Hierzu ist es nötig am Vorratsgefäß einen ausreichend hohen Vordruck anzulegen. Wie Versuche zeigen, reicht ein einmaliger Spülvorgang oftmals nicht aus, um die Kapillarinnenwand homogen mit der zu dosierenden Substanz zu benetzen. Dies ist aber dringend erforderlich um einen ordnungsgemäßen Dosiervorgang zu erreichen. Somit ist es sinnvoll den Spülvorgang zu wiederholen, wobei es sich als sinnvoll erweist, die Kapillare jeweils zu entleeren, bevor ein neuer Spülvorgang durchgeführt wird. Zum Entleeren der Kapillare muss am Vorratsgefäß ein ausreichend hoher Unterdruck angelegt werden, der die Flüssigkeit zurück in das Vorratsgefäß fördert.

Ein ähnlicher Vorgang sollte nach Beendigung einer Dosierung erfolgen. Als erstes muss der zu dosierende Stoff aus der Kapillare entfernt werden, wozu wieder ein ausreichend hoher Unterdruck im Vorratsgefäß angelegt werden muss. Unter Umständen ist es sinnvoll, das Vorratsgefäß gegen ein leeres Gefäß auszutauschen, um alle verbliebenen Reste des zu dosierenden Stoffes durch erneutes Anlegen von Unterdruck, jetzt an das leere Gefäß, aus der Kapillare zu entfernen. Sinnvoll ist auch das Spülen der Kapillare mit einer geeigneten Spülflüssigkeit. Hierzu wird ein Gefäß mit Spülflüssigkeit an Stelle des Vorratsgefäßes angeschlossen. Es folgen mehrere Spül- und Entleerungsvorgänge analog zu dem oben beschriebenen Startvorgang.

Zur genaueren Beschreibung der vorliegenden Erfindung werden nun zunächst die erfindungsgemäß in Bezug auf die Druckregulierung vorgenommenen Maßnahmen in drei Kategorien aufgeteilt:
1) Ausgleich des Druckes zwischen dem Vorratsgefäß und dem Dosierraum,
2) Ausgleich des Druckes, der sich aus dem Niveauunterschied zwischen dem Flüssigkeitsspiegel im Vorratsgefäß und dem Austrittspunkt der Tröpfchen (beim Austritt in den Dosierraum) ergibt, und
3) Realisierung des Start- und Spülvorgangs.

### Ausgleich des Druckes zwischen Vorratsgefäß und Dosierraum

In dieser erfindungsgemäßen Variante wird eine Druckregelvorrichtung vorgesehen, welche einen Druckausgleich zwischen dem Vorratsgefäß und dem Dosierraum ermöglicht. Eine solche Druckregelvorrichtung kann im einfachsten Fall durch eine gasoffene Überleitung zwischen dem Dosierraum und dem Vorratsgefäß realisiert werden. Durch eine solche Überleitung wird ein Gasaustausch zwischen den beiden Volumina des Dosierraums und des Vorratsgefäßes ermöglicht, was zu einer sehr schnellen Druckanpassung führt. Hierbei kann jedoch auch zu dosierender Stoff, welcher entweder bereits im Dosierraum verdampft wurde oder in der Gasphase über dem zu dosierenden Stoff im Vorratsgefäß ist, transportiert werden. Dies kann im Einzelfall zwar akzeptabel sein, wird aber in der Regel ein nicht erwünschter Effekt sein: Um einen solchen Übergang von zu dosierendem Stoff in der Gasphase zwischen Vorratsgefäß und Dosierraum zu verhindern, kann erfindungsgemäß vorteilhafterweise in die Druckausgleichsleitung eine Vorrichtung eingebaut werden, welche zwar einen Druckausgleich wie beschrieben erlaubt, den Übertritt von zu dosierendem Stoff jedoch gleichzeitig verhindert.

Eine weitere erfindungsgemäße Möglichkeit, mittels einer Druckregelvorrichtung den Druckausgleich zwischen Vorratsgefäß und Dosierraum durchzuführen, stellt die Verwendung von Druckaufnehmern für die Drücke im Dosierraum und/oder im Vorratsgefäß dar. Mit solchen Druckaufnehmern können die Drücke in den beiden Volumina bestimmt werden und die daraus berechnete, somit bekannte Druckdifferenz zwischen Dosierraum und Vorratsgefäß kann dazu benutzt werden, um den Druck im Vorratsgefäß (und/oder auch im Dosierraum) entsprechend einzustellen. Dabei ist es nicht notwendig, einen direkten Gasweg zwischen Dosierraum und Vorratsgefäß zu errichten (wie es bei der vorbeschriebenen Variante der Fall ist), was einen Übertritt von zu dosierendem Stoff ausschließt. Ein solcher Gasweg kann jedoch zusätzlich eingerichtet werden. Vielmehr erfolgt in diesem Fall der Druckausgleich, wie nachfolgend noch näher beschrieben, durch zusätzlich angebrachte Systeme (eine mit dem Druckaufnehmer verbundene Steuereinheit sowie eine mit der Steuereinheit verbundene Stelleinheit). Ausgleich des Druckes, welcher aus dem Niveauunterschied zwischen dem Flüssigkeitsspiegel im Vorratsgefäß und dem Austrittspunkt der Tröpfchen resultiert

In einer weiteren Ausgestaltung der Erfindung kann eine Druckregelvorrichtung vorgesehen werden, mit welcher der aus dem Niveauunterschied zwischen dem Flüssigkeitsspiegel im Vorratsgefäß und dem Austrittspunkt der Tröpfchen resultierende Druck eingestellt wird. Dies kann erfindungsgemäß auf verschiedene Arten und Weisen geschehen. Am einfachsten ist hierbei, die relative Höhe zwischen dem Flüssigkeitsspiegel im Vorratsgefäß und dem Punkt der Tröpfchenemission auf den zu dosierenden Stoff anzupassen und für den gesamten Verlauf der Dosierung soweit notwendig konstant zu halten. Dies kann beispielsweise über eine manuelle Nachregelung oder auch über eine mechanische Stellvorrichtung realisiert werden.

Je nach Viskosität hat der Stoff beispielsweise in einem Kapillarsystem einen bestimmten Widerstand zu überwinden. Letzterer kann erfasst oder abgeschätzt werden und die Vorrichtung ensprechend, z.B. über eine mechanische Stellvorrichtung in Form einer Gewindestange mit Stellmutter, eingerichtet werden.

Hierbei kann dann in einer Leitung zwischen dem Vorratsgefäß und dem Dosierkopf eine Absperrvorrichtung integriert werden, welche geeignet ist, den Flüssigkeitsfluss zu sperren. Zusätzlich kann in diese Leitung eine Pumpe installiert werden (zum Flüssigkeitstransport), die Absperrvorrichtung wird dann vorteilhafterweise zwischen dem Vorratsgefäß und der Pumpe angeordnet. Insbesondere kann dies in Form eines Regulierventils geschehen, welches geeignet ist, den Flüssigkeitsfluss geeignet zu regeln.

Es ist selbstverständlich möglich, durch geeignete Leitungsverschaltungen und/oder Ventile mehrere Vorratsgefäße mit einem Dosierkopf zu verbinden. Ebenso ist es möglich, durch geeignete Leitungsverschaltungen und/oder Ventile mehrere Dosierköpfe mit einem Vorratsgefäß zu verbinden. Vorteilhafterweise kann darüberhinaus in der Flüssigkeitsleitung zwischen Vorratsgefäß und Dosierkopf eine Abscheidevorrichtung integriert sein, welche geeignet ist, Partikel aus dem zuzudosierenden Stoff bzw. aus der zuzudosierenden Flüssigkeit abzuscheiden.

Eine weitere erfindungsgemäße Möglichkeit der Realisierung einer solchermaßen ausgebildeten Druckregelvorrichtung besteht darin, die Einstellung des geeigneten Vordrucks durch eine Pumpe vorzunehmen. Eine solche Pumpe muss in der Lage sein, einen konstanten, dabei relativ geringen Vordruck zu erzeugen und diesen auch zu halten. Der Vorteil einer solchen Lösung besteht darin, dass mit einer solchen Pumpe teilweise oder vollständig weitere, vorstehend bereits beschriebene oder nachfolgend noch zu beschreibende Vorgänge durchgeführt werden können. Die Pumpe ist hierbei vorteilhafterweise in die Flüssigkeitsleitung zwischen Vorratsgefäß und Dosierkopf integriert. Vorteilhafterweise ist die Pumpe dabei geeignet, die zu dosierende Flüssigkeit sowohl in Richtung zum Dosierkopf hin, als auch in Richtung von diesem weg zu bewegen. Alternativ hierzu können auch zwei geeignete Pumpen zwischen Vorratsgefäß und Dosierkopf integriert werden. Hierbei ist dann eine der Pumpen geeignet, die zu dosierende Flüssigkeit in Richtung des Dosierkopfs zu bewegen und die andere Pumpe ist geeignet, die zu dosierende Flüssigkeit in Richtung von dem Dosierkopf wegzubewegen. Darüberhinaus kann in die Leitung zwischen Pumpe und Dosierkopf (bzw. zwischen der Pumpenanordnung aus zwei Pumpen und dem Dosierkopf) ein Überdruckventil integriert werden. Wiederum können durch geeignete Leitungsverschaltungen und Ventile mehrere Vorratsgefäße mit einem Dosierkopf verbunden werden oder auch mehrere Dosierköpfe mit einem Vorratsgefäß verbunden werden. In die Leitung zwischen Pumpe (oder Pumpenanordnung) und Dosierkopf kann schließlich eine Absperrvorrichtung integriert werden, welche geeignet ist, den Flüssigkeitsfluss zu unterbinden. Ebenso kann zusätzlich eine Abscheidevorrichtung integriert werden, welche geeignet ist, Partikel aus der Flüssigkeit abzuscheiden.

Eine dritte erfindungsgemäße Möglichkeit, eine entsprechende Druckregelvorrichtung auszubilden, um den benötigten Vordruck zu erzeugen, ist es, das Vorratsgefäß a priori überhoch zu platzieren, was bedeutet, einen mit Sicherheit zu hohen Vordruck zu erzeugen. Dieser wird dann durch eine geeignete Anordnung zwischen Vorratsgefäß und Dosierkopf wieder soweit reduziert, dass ein geeigneter statischer Vordruck am Punkt der Tröpfchenemission anliegt. Dies kann wiederum manuell, etwa durch Betätigen eines Nadelventils, oder durch eine geeignete mechanische Einrichtung (z.B. Druckregelventil) realisiert werden.

### Realisierung eines Start- und Spülvorgangs mit den vorstehend beschriebenen Varianten

Wie bereits beschrieben, muss zum Starten des und nach Beenden des Dosiervorgangs die Kapillare bzw. die Verbindungsleitung zwischen Vorratsgefäß und Dosierkopf ggf. abwechselnd gespült und entleert werden. Solche Spül- und Entleerungsvorgänge können bei Wahl einer geeigneten Pumpe wie vorstehend beschrieben mit durchgeführt werden. Dabei muss die Möglichkeit gegeben sein, einen Flüssigkeitsfluss in beiden Richtungen, sowohl vom Vorratsgefäß zum Dosierkopf als auch umgekehrt, zu realisieren.

Einfacher ist hierbei der Einsatz eines Kolbens anstelle einer Pumpe (siehe auch nachfolgende Beschreibung), welcher entweder manuell oder durch eine geeignete Mechanik betätigt werden kann. Mit einem solchen Kolben kann sowohl ein Unter- als auch ein Überdruck in dem Vorratsgefäß erzeugt werden. Wird zusätzlich eine geeignete Steuerelektronik bzw. Steuereinheit zur Steuerung eines solchen Kolbens verwendet, können damit ebenfalls die vorstehend beschriebenen erfindungsgemäßen Vorgänge durchgeführt werden. Um das Anlegen des im Kolben erzeugten Über- oder Unterdrucks jederzeit unterbinden zu können, wird vorteilhafterweise eine Absperrvorrichtung zwischen Kolben und Vorratsgefäß installiert.

### Erfindungsgemäße Verdünnung und resultierende Möglichkeiten der Verwendung des beladenen Trägermatrixstroms

Ein weiterer wesentlicher Aspekt der vorliegenden Erfindung ist (wie nachfolgend noch ausführlich beschrieben wird) das Zurverfügungstellen von mehreren, jeweils mit Mess- und/oder Regeleinrichtungen versehenen Trägermatrix-Zuführstrecken (nachfolgend auch als Trägermatrix-Zuführkanäle bezeichnet) sowie das anschließende Zusammenführen der durch die mehreren Trägermatrix-Zuführkanäle geleiteten Trägermatrizen sowie das Leiten der zusammengeführten TrägermatrixStröme zu einer nachfolgenden Verwendung.

Hierbei wird erfindungsgemäß die beladene Trägermatrix in einem oder mehreren weiteren Schritten vor ihrer Verwendung verdünnt. Werden ausreichend genaue Systeme zur Messung und Regelung der beteiligten Trägermatrixströme verwendet, so kann mit hinreichender Genauigkeit die resultierende Konzentration in der dann verdünnten Trägermatrix berechnet werden. Durch die vorteilhafterweise erfindungsgemäß erfolgende Kopplung mehrerer solcher Verdünnungsschritte ist es möglich, selbst kleinste Konzentrationen zuverlässig zu generieren. Ebenso bietet sich die Möglichkeit an, bei Durchführung mehrerer Verdünnungsschritte die entstehenden Zweigströme gezielt zu nutzen, z.B. für Kalibriervorgänge, da die Zweigströme in einen definierten (bekannten) Verhältnis zueinander vorliegen.

### Weitere vorteilhafte Ausgestaltungsmöglichkeiten der vorliegenden Erfindung

Bei allen bisher vorgestellten erfindungsgemäßen Vorrichtungen bzw. Verfahren können vorteilhafterweise Messungen der resultierenden Konzentration von zu dosierendem Stoff in der Trägermatrix erfolgen: Bei der gezielten Zugabe von Stoffen in eine Trägermatrix mittels piezoaktivierter Tröpfchenemission kann es sich oftmals um einen nicht-stationären Vorgang handeln, der entweder gewollt oder aufgrund systemimmanenter Gegebenheiten im Verlauf einer Dosierung variiert. Die Kontrolle eines solchen Vorgangs ist am einfachsten durch eine gleichzeitige Messung (Onlinemessung) der durch die Tröpfchenemission generieren Konzentration des zu dosierenden Stoffs in der Trägermatrix möglich. Unter Umständen kann auch eine ausreichend zeitnahe Messung genügen. Dabei kann als Messsystem bzw. als Konzentrationsmesseihheit sowohl ein System zum Einsatz kommen, welches für die Analyse der Konzentration mit Stoff beladene Trägermatrix entnimmt, als auch ein System, welches ohne Probenentnahme die Konzentration bestimmen kann.

Beispiel für ein System welches ohne Probeentnahme arbeitet: Infrarot-Messsystem. Beispiel für ein System welches mit Probeentnahme arbeitet: Prozess-FID-System (FID = Flammenionisationsdetektor).

Wird hierbei ein Messsystem gewählt, welches Trägermatrix zur Analyse entnimmt, so ist die entnommene Menge in der Berechnung der Stoffflüsse zu berücksichtigen, da sie in der Regel nicht mehr der eigentlichen Verwendung des Systems zugeführt werden kann. Dies kann über eine geeignet ausgebildete Steuereinheit geschehen. Die Konzentrationsüberwachung kann hierbei kontinuierlich oder in ausreichend geringen Zeitintervallen durchgeführt werden.

In allen bisher vorgestellten Varianten kann vorteilhafterweise eine Abführung von nicht benötigtem, zudosiertem Stoff aus dem System erfolgen. Im Verlauf eines Dosiervorgangs können Situationen eintreten, in denen die Menge an zu dosierendem Stoff, der in das System eingebracht wird, viel höher ist als die im eigentlichen Betrieb eingebrachte Menge. In solchen Fällen ist es vorteilhaft, den zuviel eingebrachten Stoff schnellstmöglich aus dem System zu entfernen. Hierfür kann in dem System ein Gasweg zum Ableiten von nicht für den eigentlichen Betrieb vorgesehener, mit Stoff beladener Trägermatrix integriert werden. Dies ist auch dann von Vorteil, wenn z.B. die Konzentration des zu dosierenden Stoffs in der Trägermatrix verändert werden soll. Hierbei können Konzentrationsspitzen auftreten, die dann abgeleitet werden können. Auch für eventuell nötige Spülvorgänge des Systems, in deren Verlauf die Konzentration an zu dosierendem Stoff im System gegen 0 gebracht werden soll (beispielsweise Nullabgleich), kann eine solche Ableitungsvorrichtung eingesetzt werden. Die zur Abfuhr bzw. zur Ableitung von nicht benötigtem zudosierten Stoff bzw. beladener Trägermatrix vorgesehenen Einrichtungen werden nachfolgend genauer auch als Ausschusskanäle bezeichnet.

Im Folgenden sollen einige vorteilhafte Ausgestaltungen der Erfindung nochmals hervorgehoben werden.

Bevorzugt weist die Überleitung, die das Vorratsgefäß mit dem Dosierraum verbindet, eine Absperrvorrichtung (V1), insbesondere ein Ventil, auf, mit welcher ein Gasaustausch und bevorzugt auch ein Übertritt des Stoffes zwischen dem Dosierraum und dem Vorratsgefäß verhinderbar ist.

Vorteilhafterweise weist die Druckregelvorrichtung einen mit dem Vorratsgefäß verbundenen Druckaufnehmer und einen mit dem Dosierraum verbundenen Druckaufnehmer zur Erfassung der Drücke im Vorratsgefäß und im Dosierraum auf.

Weiter bevorzugt ist mit der Steuereinheit und über die Stelleinheit ein Druck im Vorratsgefäß einstellbar.

Bevorzugt weist die Druckzuleitung der Stelleinheit mindestens eine Absperrvorrichtung (V2, V3), insbesondere ein Ventil auf, mit der die Beaufschlagung der Druckzuleitung mit einem Überdruck und/oder mit einem Unterdruck ein- und ausschaltbar ist.

Die Vorrichtung zum Zudosieren kann durch mindestens eine eine Absperrvorrichtung (V4), insbesondere ein Ventil, aufweisende Leitung zwischen Pumpe und/oder Kolben und Vorratsgefäß und/oder Dosierraum gekennzeichnet sein.

Die Vorrichtung kann weiter gekennzeichnet sein durch mindestens ein zwischen der Flüssigkeitspumpe oder den Flüssigkeitspumpen und dem Dosierkopf und/oder mindestens ein zwischen dem Vorratsgefäß und der Flüssigkeitspumpe oder den Flüssigkeitspumpen in oder an der Durchflussleitung angeordnetes Überdruckventil (V7).

Es kann eine mit dem Vorratsgefäß und dem Dosierkopf verbundene Durchflussleitung, insbesondere eine Kapillarleitung, zum Leiten von zuzudosierendem Stoff von dem Vorratsgefäß zu dem Dosierkopf vorgesehen sein.

Die Durchflussleitung kann bevorzugt mindestens eine Absperrvorrichtung (V5, V6), insbesondere mindestens ein Ventil, zum Unterbrechen des Stofftransportes zwischen Vorratsgefäß und Dosierkopf aufweisen.

Auch kann in die Durchflussleitung mindestens eine Filtereinrichtung, insbesondere eine Fritte, integriert sein.

Die Druckreduziereinheit, welche die Druckregelvorrichtung aufweist, kann ein Überdruckventil und/oder ein Nadelventil aufweisen.

Die Vorrichtung zum Zudosieren kann vorteilhaft gekennzeichnet sein durch mehrere mit dem Dosierkopf verbundene Vorratsgefäße, welche jeweils mit einem Stoff oder Stoffgemisch in bevorzugt flüssiger Form füllbar und/oder gefüllt sind, wobei die Stoffe oder Stoffgemische dem Dosierkopf von den Vorratsgefäßen zuleitbar, über den Dosierkopf in den Dosierraum abgebbar und der Trägermatrix zudosierbar sind.

Erfindungsgemäß kann bevorzugt auch eine Vorrichtung zum Zudosieren eines Stoffes in eine Trägermatrix sein, umfassend eine Trägermatrixquelle (0) zur Erzeugung und/oder Zufuhr einer Trägermatrix, einen ersten Trägermatrix-Zufuhrkanal (K1), welchem eine Trägermatrix von der Trägermatrixquelle zuführbar ist und welcher eine erste Mess- und/oder Regeleinrichtung (F1) zum Messen und/oder Regeln des Trägermatrixstromes durch den ersten Trägermatrix-Zufuhrkanal sowie eine zum Zudosieren des Stoffes in die dem ersten Trägermatrix-Zufuhrkanal zugeführte Trägermatrix ausgebildete Dosiervorrichtung (D) aufweist, einen zweiten Trägermatrix-Zufuhrkanal (K2), welchem eine Trägermatrix von der Trägermatrixquelle zuführbar ist und welcher eine zweite Mess- und/oder Regeleinrichtung (F2) zum Messen und/oder Regeln des Trägermatrixstromes durch den zweiten Trägermatrix-Zufuhrkanal aufweist, und eine am stromabwärtigen Ende des ersten und des zweiten Trägermatrix-Zufuhrkanals angeordnete Vereinigungs- und Abführeinheit (VA, AK), welche einen Vereinigungsabschnitt (VA), in welchem der stoffbeaufschlagte Trägermatrixstrom des ersten Trägermatrix-Zufuhrkanals und der Trägermatrixstrom des zweiten Trägermatrix-Zufuhrkanals zusammenführbar sind, und einen stromabwärts des Vereinigungsabschnittes angeordneten Abführkanal (AK), über den die zusammengeführten Trägermatrixstrome zumindest teilweise einer Verwendung zuführbar sind, aufweist.

Dabei kann die Vereinigungs- und Abführeinheit mindestens einen zwischen dem Vereinigungsabschnitt (VA) und dem Abführkanal (AK) einmündenden Einströmkanal (KW) aufweisen, über welchen den zusammengeführten Trägermatrixströmen des ersten und des zweiten Trägermatrix-Zufuhrkanals eine weitere Trägermatrix von der Trägermatrixquelle zuführbar ist.

Auch kann mindestens einer der Einströmkanäle (KW) eine Mess- und/oder Regeleinrichtung zum Vermessen und/oder Regeln des Trägermatrixstromes durch diesen Einströmkanal aufweisen.

Die Vereinigungs- und Abführeinheit kann weiter mindestens einen zwischen dem Vereinigungsabschnitt (VA) und dem Abführkanal (AK) ausmündenden Ableitkanal (LK) aufweisen, über welchen ein Teil der zusammengeführten Trägermatrixströme des ersten und des zweiten Trägermatrix-Zufuhrkanals abführbar ist.

Mindestens einer der Ableitkanäle (LK) kann eine Mess- und/oder Regeleinrichtung zum Vermessen und/oder Regeln des Trägermatrixstromes durch diesen Ableitkanal aufweisen.

Auch kann mindestens einer der Ableitkanäle (LK) als ein weiterer Abführkanal (AKW) ausgebildet sein, über den die zusammengeführten Trägermatrixströme zumindest teilweise einer Verwendung zuführbar sind, oder mindestens einer der Ableitkanäle (LK) kann als ein Ausschusskanal (SK) ausgebildet sein, über den die zusammengeführten Trägermatrixströme zumindest teilweise und ohne einer Verwendung zugeführt zu werden, abführbar sind.

Es können mehrere Einströmkanäle (KW) und mehrere Ableitkanäle (LK) vorgesehen sein, wobei bevorzugt in Strömungsrichtung gesehen abwechselnd einmündende Einströmkanäle und abmündende Ableitkanäle angeordnet sind.

Die Vorrichtung kann gekennzeichnet sein durch einen im ersten Trägermatrix-Zufuhrkanal (K1) strömungsabwärts der Dosiervorrichtung (D) ausmündend angeordneten Ausschusskanal (SK), über welchen der Trägermatrixstrom des ersten Trägermatrix-Zufuhrkanals zumindest teilweise und ohne einer Verwendung zugeführt zu werden abführbar ist.

Im Strömungsweg der Trägermatrix kann vorteilhaft mindestens eine zum Sperren und Öffnen und/oder zum Regeln des Durchflussvolumens des Trägermatrixstroms pro Zeiteinheit ausgebildete Absperr- und/oder Regeleinheit (W), insbesondere ein Ventil, angeordnet sein.

Mindestens eine der Absperr- und/oder Regeleinheiten (W) im ersten Trägermatrix-Zufuhrkanal (K1), insbesondere unmittelbar stromaufwärts des Vereinigungsabschnittes (VA) im ersten Trägermatrix-Zufuhrkanal, kann im zweiten Trägermatrix-Zufuhrkanal (K2), insbesondere unmittelbar stromaufwärts des Vereinigungsabschnittes (VA) im zweiten Trägermatrix-Zufuhrkanal, in dem Abführkanal (AK), in einem Ableitkanal (LK), in einem Ausschusskanal (SK), in einem weiteren Abführkanal (AKW) oder in einem Einströmkanal (KW) angeordnet sein.

Die Trägermatrixquelle kann mindestens eine Mehrfachversorgungseinheit aufweisen, mit der mehreren und/oder allen Kanälen aus dem ersten Trägermatrix-Zufuhrkanal (K1), dem zweiten Trägermatrix-Zufuhrkanal (K2) und/oder den Einströmkanälen (KW) eine Trägermatrix zuführbar ist und/oder die Trägermatrixquelle kann mindestens eine Einfachversorgungseinheit aufweisen, mit der einem Kanal aus dem ersten Trägermatrix-Zufuhrkanal (K1), dem zweiten Trägermatrix-Zufuhrkanal (K2) oder den Einströmkanälen (KW) eine Trägermatrix zuführbar ist.

Die erste Mess- und/oder Regeleinrichtung (F1) ist vorteilhaft stromaufwärts der Dosiervorrichtung (D) angeordnet.

Der erste Trägermatrix-Zufuhrkanal (K1) und/oder der Abführkanal (AK) kann eine stromabwärts der Dosiervorrichtung (D) angeordnete, zur Messung der Konzentration von zudosiertem Stoff im Trägermatrixstrom ausgebildete Konzentrationsmesseinheit (M) aufweisen.

Die Konzentrationsmesseinheit (M) kann vorteilhaft mittels einer Absperr- und/oder Regeleinheit (W1), insbesondere mittels eines Ventils, dem ersten Trägermatrix-Zufuhrkanal (K1) und/oder dem Abführkanal (AK) zuschaltbar sein.

Die Könzentratiönsmesseinheit (M) kann ausgebildet sein zur Messung der Konzentration ohne Entnahme einer Probe von mit Stoff beladener Trägermatrix oder die Konzentrationsmesseinheit (M) kann ausgebildet sein zur Messung der Konzentration mittels der Entnahme einer Probe von mit Stoff beladener Trägermatrix.

Mindestens einer der Kanäle kann eine zur Regelung der Temperatur des durchfließenden Trägermatrixstromes ausgebildete Temperaturregelvorrichtung, insbesondere eine Heizvorrichtung, aufweisen und/oder mindestens einer der Kanäle kann zumindest teilweise mit einer temperaturisolierenden Umhüllung versehen sein.

Die Vorrichtung kann gekennzeichnet sein durch eine stromabwärts des Abführkanals (AK) angeordnete Verwendungsvorrichtung, insbesondere eine chemische Analyseeinrichtung, eine Prüfvorrichtung und/oder eine Produktionseinrichtung, der der aus dem Abführkanal abgeführte Trägermatrixstrom zu der Verwendung zuführbar ist.

Die vorstehend beschriebene Vorrichtung kann eine Vorrichtung zum Zudosieren aufweisen, wie sie zuvor beschrieben wurde.

Die Dosiervorrichtung (D) kann insbesondere das Vorratsgefäß (1), die Dosiereinheit (3, 4) und die Druckregelvorrichtung umfassen.

Erfindungsgemäß kann ein Verfahren zum Zudosieren eines Stoffes in eine Trägermatrix ausgeführt werden, umfassend die Schritte des Zuführens einer Trägermatrix von einer Trägermatrixquelle (0) zu einem ersten Trägermatrix-Zufuhrkanal (K1), des Messens und/oder Regelns des Trägermatrixstromes durch den ersten Trägermatrix-Zufuhrkanal sowie des Zudosierens des Stoffes in die dem ersten Trägermatrix-Zufuhrkanal zugeführte Trägermatrix, des Zuführens einer Trägermatrix von der Trägermatrixquelle (0) zu einem zweiten Trägermatrix-Zufuhrkanal (K1) und des Messens und/oder Regelns des Trägermatrixstromes durch den zweiten Trägermatrix-Zufuhrkanal, des Zusammenführens des vermessenen und/oder geregelten stoffbeaufschlagten Trägermatrixstroms des ersten Trägermatrix-Zufuhrkanals und des vermessenen und/oder geregelten Trägermatrixstroms des zweiten Trägermatrix-Zufuhrkanals, und des zumindest teilweisen Zuführens der zusammengeführten Trägermatrixströme zu einer Verwendung.

Dabei kann das Verfahren insbesondere mit einer oben beschriebenen Vorrichtung durchgeführt werden.

### Ausführungsbeispiele der Erfindung

Nachfolgend wird nunmehr zunächst beschrieben, wie konkret eine Regelung der Zugabe von Stoff mittels des Dosierkopfes erfindungsgemäß erfolgt.

Hierzu zeigt
- Figur 1: eine erste Ausgestaltungsform der Erfindung unter Verwendung einer Überleitung.
- Figur 2: eine zweite Ausgestaltung der Erfindung unter Verwendung von Druckaufnehmern sowie einer Überdruck- und einer Unterdruckleitung.

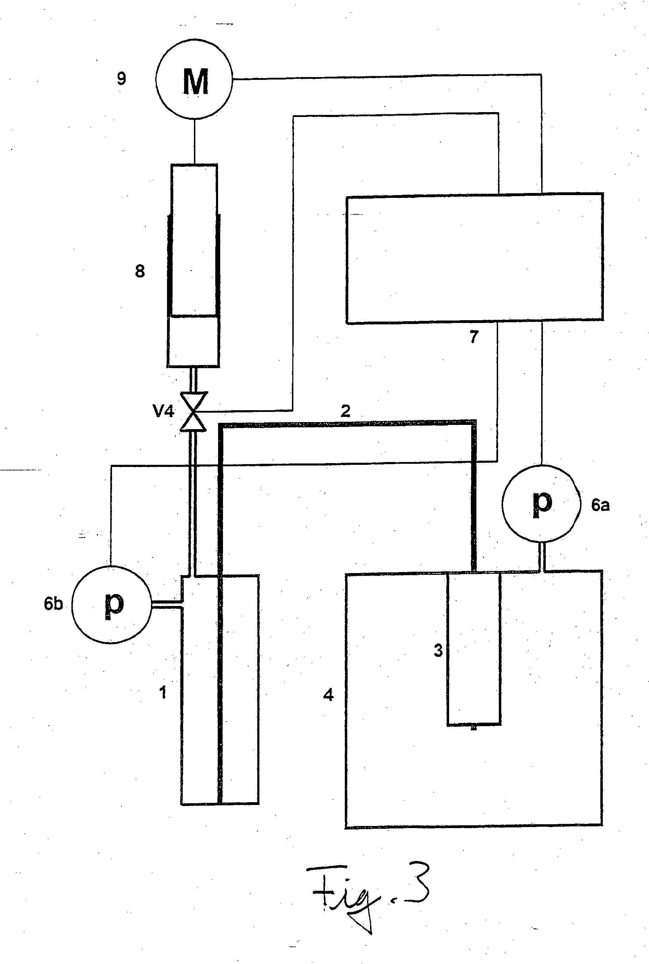

- Figur 3: eine weitere Ausgestaltungsform unter Verwendung von Druckaufnehmern sowie unter Verwendung eines Kolbens oder einer Pumpe.
- Figur 4: eine weitere Ausgestaltung unter Verwendung einer Pumpanordnung in der Flüssigkeitsleitung zwischen dem Vorratsgefäß und dem Dosierkopf.

Anschließend wird beschrieben, wie erfindungsgemäß konkret die Führung und/oder Einstellung des bereits beladenen Trägermatrixstroms, insbesondere durch Verdünnung desselben, erfolgen kann. Hierzu zeigt
- Figur 5: eine erste Ausgestaltungsform mit zwei Trägermatrix-Zufuhrkanälen mit jeweils integrierter Mess- und/oder Regeleinrichtung.
- Figur 6: ein weiteres Ausführungsbeispiel, in welchem die in Figur 5 gezeigte Vorrichtung um weitere Einströmkanäle und Ableitkanäle ergänzt ist.

Ausführungsbeispiel 1:

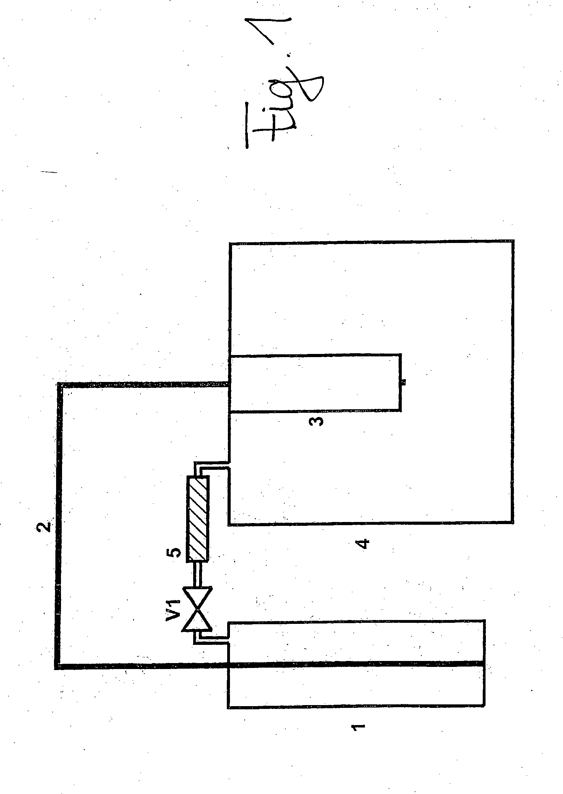

Figur 1 zeigt ein erstes Ausführungsbeispiel für eine Vorrichtung zum Zudosieren eines Stoffes in eine Trägermatrix gemäß der Erfindung. Hierbei ist ein Vorratsgefäß 1 vorgesehen, welches über eine Leitung, hier eine Kapillarleitung 2 mit dem Dosierkopf 3 einer Dosiereinheit verbunden ist. Die Dosiereinheit weist darüberhinaus neben dem Dosierkopf 3 einen Dosierraum 4 auf, welcher einen Raum darstellt, in dem der Dosierkopf 3 zur Abgabe des Stoffes in den Dosierraum 4 angeordnet ist. Bei dem Dosierkopf handelt es sich um einen zur piezoelektrisch aktivierten Tröpfchenemission ausgebildeten Dosierkopf.

Erfindungsgemäß weist die gezeigte Vorrichtung nun eine Verbindung Ü in Form einer Überleitung zwischen dem Vorratsgefäß 1 und dem Dosierraum 4 auf. Diese Verbindung ist grundsätzlich gasoffen ausgestaltet, kann jedoch durch eine Absperrvorrichtung in Form eines Ventils V1 gasdicht verschlossen werden. Das Ventil V1 ist hierbei in der Überleitung Ü integriert. Im Gasweg zwischen Ventil V1 und Dosierraum 4 ist in die Überleitung Ü desweiteren eine Stoffsperrvorrichtung 5 integriert.

Im vorliegenden Fall ist somit der Druckausgleich zwischen Vorratsgefäß 1 und Dösierraum 4 durch eine Überleitung Ü realisiert. Diese Überleitung ist mit einem ausreichend großen Innendurchmesser konzipiert, um einen ausreichend schnellen Druckausgleich zu ermöglichen. Gleichzeitig ist hierbei der Innendurchmesser so klein wie möglich gehalten, um die bei diesem erfindungsgemäßen Absatz unvermeidbaren Stoffübergänge zwischen Vorratsgefäß und Dosierraum auf das kleinstmögliche Maß zu beschränken.

Weiterhin ist die Möglichkeit gegeben, dass der Gasweg zwischen Vorratsgefäß 1 und Dosierraum 4 abgesperrt wird: Dies geschieht über das Ventil V1. Dies kann z.B. nötig sein, um den vorstehend beschriebenen Startvorgang durchzuführen.

Vorliegend weist das System darüberhinaus eine Stoffsperrvorrichtung 5 auf, welche im Gasweg zwischen Vorratsgefäß und Dosierraum 4 angebracht ist: Der Zweck dieser Vorrichtung 4 ist es, den Übertritt von zu dosierendem Stoff zu verhindern, gleichzeitig aber einen Druckausgleich zuzulassen. Als Stoffsperrvorrichtung 5 können in die Überleitung Ü eingebrachte, geeignete adsorptive und/oder absorptive oder katalytisch aktive Substanzen verwendet werden. Diese bewirken, dass zu dosierender Stoff aus der durch die Überleitung strömenden Luft abgeschieden wird bzw. zersetzt wird. Die Auswahl der Substanzen richtet sich somit naturgemäß nach dem zuzudosierenden Stoff. Hierbei ist darauf zu achten, dass der Strömungswiderstand ausreichend gering ist, so dass ein ausreichend schneller Druckausgleich erfolgen kann. Dies kann beispielsweise durch geeignete Korngröße der Substanz erzielt werden.

Eine weitere Möglichkeit, den Übertritt von zuzudosierender Substanz zu verhindern, ist die Verwendung einer Membran als Stoffsperrvorrichtung 5 in der Überleitung Ü. Diese Membran ist hierbei in Abhängigkeit von den zu erwartenden Druckschwankungen so zu dimensionieren, dass auch die größtmöglichen Druckschwankungen kompensiert werden können, ohne dass die Membran reißt. Alternativ ist es auch denkbar, eine Flüssigkeit als Trennvorrichtung bzw. als Stoffsperrvorrichtung 5 einzusetzen. Hierbei ist zu gewährleisten, dass der Druckausgleich in beide Richtungen erfolgen kann. Dies kann beispielsweise durch eine Ausführung eines Teils der Überleitung in Form eines U-Rohres realisiert werden, wobei der U-Rohrabschnitt der Überleitung Ü an beiden Enden eine ausreichend große Verdickung aufweist, so dass das Ausblasen der Flüssigkeit verhindert wird. In diesem Fall wäre allerdings ein Übertritt von zuzudosierendem Stoff nicht ausgeschlossen. Die Flüssigkeit ist in einem solchen Fall somit in einer Anordnung zu platzieren, welche geeignet ist, einen Gasaustausch zwischen Dosierraum und der Gasphase über der zu dosierenden Flüssigkeit im Vorratsgefäß ohne Flüssigkeitsverbrauch zuzulassen.

Im gezeigten Ausführungsbeispiel (dies gilt ebenso für die nachfolgend gezeigten Ausführungsbeispiele) ist die Trägermatrixquelle (welche auch aus mehreren Einzelquellen bestehen kann), mit welcher eine Trägermatrix in Form eines Gasstroms erzeugt werden und den Dosierraum 4 zum Zuzudosieren des Stoffs zugeführt werden kann, nicht gezeigt. Der zuzudosierende Stoff ist in dem Vorratsgefäß 1 in flüssiger Form enthalten. Im gezeigten Fall ist die erfindungsgemäße Druckregelvorrichtung somit über die Elemente Ü, V1 und 5 ausgebildet.

Darüberhinaus ist es alternativ zur gasoffenen Variante möglich, dass eine Vorrichtung zum Druckausgleich zwischen Dosierraum 4 und der Gasphase über der zu dosierenden Flüssigkeit im Vorratsgefäß 1 in Form eines gasdichten Übergangs vorgesehen ist. Wie bereits beschrieben, kann es sich bei einer solchen Vorrichtung zum Druckausgleich um eine geeignet ausgebildete Membran handeln. In den dann gasdicht ausgeführten Übergang kann wiederum eine Absperrvorrichtung integriert sein, welche geeignet ist, den Druckausgleich zu unterbinden.

Ausführungsbeispiel 2:
In diesem Fall ist die erfindungsgemäße Druckregelvorrichtung wie nachfolgend näher beschrieben mittels zwei Druckaufnehmern 6a und 6b, einer Druckzuleitung 11, einer Unterdruckleitung 11a, einer Überdruckleitung 11b, zwei Ventilen V2 und V3, und einer Steuereinheit 7 ausgebildet. Die Steuereinheit 7 dient dabei in Abhängigkeit von den mit den Druckaufnehmern 6a und 6b erfassten Drücken zur Regelung des Drucks im Vorratsgefäß 1 mittels der Stelleinheit 11 (welche hier in Form von Unterdruck- und Überdruckleitungen ausgebildet ist, in den nachfolgend noch beschriebenen Beispielen jedoch auch alternativ durch die Elemente 8, 9 und/oder 10 ausgebildet sein kann).

Der erste Druckaufnehmer 6a ist mit dem Dosierraum 4 verbunden und erfasst den in diesem Raum herrschenden Druck. Der zweite Druckaufnehmer 6b ist mit dem Vorratsgefäß 1 verbunden und erfasst den Druck oberhalb des Flüssigkeitsniveaus im Vorratsgefäß. Die gemessenen Drücke werden über Leitungen an die Steuereinheit 7 geleitet. Die Steuereinheit 7 bewertet die Druckdifferenz zwischen den beiden erfassten Drücken und regelt demgemäß durch ihre Verbindung mit zwei Ventilen V2 und V3 den Druck im Vorratsgefäß 1: Hierzu ist das Vorratsgefäß 1 über die Druckzuleitung 11 mit einer Unterdruckleitung 11a und einer Überdruckleitung 11b verbunden. Im Unterdruckabschnitt 11a ist das Ventil V3 vorgesehen, im Überdruckleitungsabschnitt 11b das Ventil V2. Über die Steuereinheit 7 kann daher je nach erfasstem Druckzustand bzw. je nach erfasster Druckdifferenz zwischen Vorratsgefäß und Dosierraum entweder das Ventil V2 geöffnet und das Ventil V3 geschlossen werden oder umgekehrt. Im ersten Fall wird das Vorratsgefäß 1 mit einem Überdruck p+ beaufschlagt, im umgekehrten Fall mit einem Unterdruck p-. Die weitere Ausgestaltung dieser Zudosiervorrichtung entspricht dem in Figur 1 gezeigten Fall.

Diese gezeigte Variante hat den Vorteil, dass der Übergang von zu dosierendem Stoff durch die Verwendung der Druckaufnehmer zur Aufnahme des Drucks im Dosierraum (Aufnehmer 6a) und des Drucks im Dosiergefäß (Aufnehmer 6b) ausgeschlossen ist, da keine Überleitung Ü benötigt wird. Bei diesem System wird mittels der elektronischen Steuer- und Regelvorrichtung bzw. Steuereinheit 7 der Druck im Vorratsgefäß 1 aufgrund der über die Druckaufnehmer erfassten und somit bekannten Druckdifferenz reguliert. Dies erfolgt, indem die beiden Absperrvorrichtungen V2 und V3 je nach Anforderung geöffnet oder geschlossen werden. Dabei öffnet die Absperrvorrichtung V2 die Zuleitung zum Vorratsgefäß, an welcher der Überdruck anliegt. Die Absperrvorrichtung V3 öffnet die Zuleitung zum Vorratsgefäß, an der Unterdruck anliegt. Überdruck kann z.B. erzeugt werden, indem eine Druckleitung 11b angeschlossen wird oder indem alternativ eine Pumpe einen ausreichenden Vordruck erzeugt. Dieser Vordruck muss ausreichend über dem Druck im Dosierraum 4 liegen, um die geförderten Ausgleichsvorgänge durchführen zu können. Unterdruck kann beispielsweise erzeugt werden, indem ein Kolben, der durch entsprechendes Herausziehen einen konstanten Unterdruck erzeugt, oder eine Pumpe an die Unterdruckleitung 11a angeschlossen wird. Es ist hierbei auch möglich, dass in dem Dosierraum 4 konstruktionsbedingt ständig ein Überdruck anliegt. In diesem Fall kann u.U. auf eine Erzeugung von Unterdruck verzichtet werden. Die Druckdifferenz zur Umgebungsluft kann dann für die entsprechenden Ausgleichsvorgänge ausreichend sein.

Die Regulierung des Drucks in der Gasphase über der zu dosierenden Flüssigkeit im Vorratsgefäß 1 erfolgt somit durch Öffnen und/oder Schließen jeweils einer Gasleitung mit Unterdruck und einer Gasleitung mit Überdruck. Der Unterdruck kann hierbei durch eine Pumpe, einen Kolben oder durch die Vorhandene Druckdifferenz zwischen Dosierraum und der Gasphase über der zu dosierenden Flüssigkeit im Vorratsgefäß erzeugt werden. Eben solches gilt für den benötigten Überdruck. Darüberhinaus kann in die Zuleitung 11 eine weitere Absperrvorrichtung integriert sein, die geeignet ist, den Gasfluss zu unterbinden.

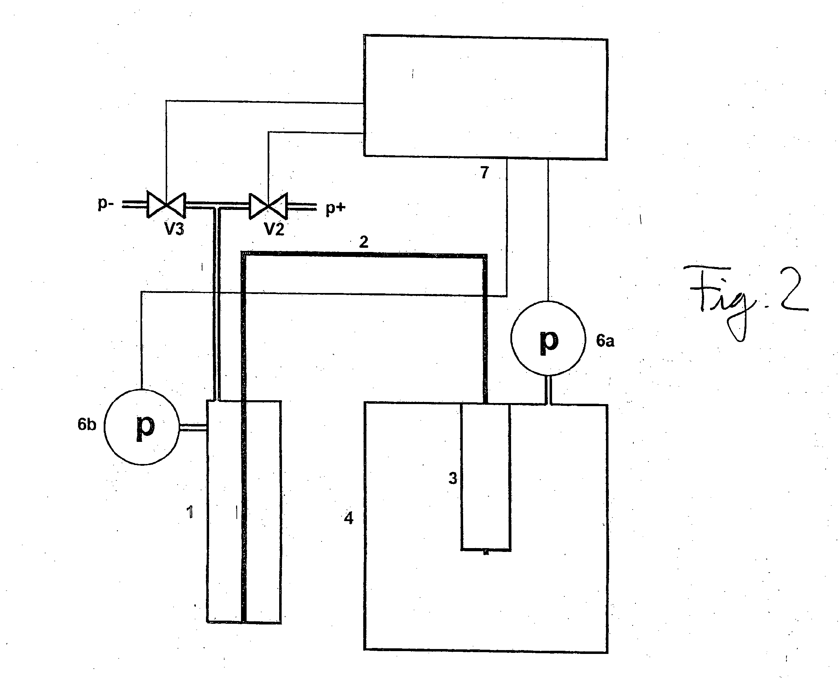

Ausführungsbeispiel 3:
Die nachfolgend beschriebene Vorrichtung ist grundsätzlich ebenso aufgebaut wie die in Figur 2 gezeigte Vorrichtung. Es werden daher nur die Unterschiede beschrieben. Anstelle der Verwendung zweier Eingänge 11a und 11b, jeweils für Unter- und Überdruck, wird in diesem Fall die Erzeugung von Über- oder Unterdruck im Vorratsgefäß 1 mittels eines Kolbens 8k realisiert. Alternativ dazu kann der Über- oder Unterdruck auch mittels einer Pumpe 8p, welche anstelle des Kolbens angeordnet wird (hier nicht gezeigt), erfolgen. Hierbei ist nur eine Gasleitung 12 zwischen dem Kolben 8k oder der Pumpe 8p und dem Vorratsgefäß 1 vorgesehen. Der Kolben bzw. die Pumpe ist mit einem Stellmotor 9 verbunden, welcher wiederum über die Steuereinheit 7 geregelt wird. Darüberhinaus weist die Leitung 12 zwischen Kolben/Pumpe und Vorratsgefäß 1 eine Absperrvorrichtung V4 in Form eines Ventils auf. Dieses wird ebenfalls über die Steuereinheit 7 geregelt.

Im vorliegenden Fall erzeugt der Kolben 8k durch Kompression Überdruck und durch Expansion Unterdruck (Steuerung mittels des Motors 9). Die Dimensionierung des Kolbens 8k muss dabei der Größe des Vorratsgefäßes angepasst sein. Der Antrieb des Kolbens kann wie beschrieben über den Stellmotor 9, also über eine mechanische Einrichtung, erfolgen, er kann jedoch auch manuell angetrieben werden. Hier ist somit ein elektrisch ansteuerbares Bewegungssystem realisiert, bei dem die über die Druckaufnehmer 6a und 6b erfassten Drücke in der Steuereinheit 7 ausgewertet werden, woraufhin mittels der Steuereinheit 7 die Stelleinheit 8k, 9, V4 und 12 zur Erzeugung eines geeigneten Drucks im Vorratsgefäß 1 eingestellt wird. Somit ist mit den beschriebenen Elementen eine automatisierte Druckregulierung möglich.

Um den Gasweg zwischen Vorratsgefäß 1 und Kolben 8k zu unterbrechen, ist der Einsatz der Absperrvorrichtung V4 vorgesehen. Bei Einsatz des Kolbens 8k und einer geeigneten Steuer- und Regeleinrichtung bzw. Steuereinheit 7 mit den beschriebenen Druckaufnehmern 6 lassen sich alle in den vorstehenden Abschnitten bereits beschriebenen Druckereignisse durchführen bzw. kontrollieren. Bei Verwendung einer Pumpe anstelle des Kolbens ist diese so zu wählen, dass sie sowohl ausreichend Überdruck, als auch ausreichend Unterdruck erzeugen kann. Dabei muss sie ausreichend schnell zwischen der Erzeugung von Überdruck und der Erzeugung von Unterdruck wechseln können. Sie kann dann analog wie der Kolben an die elektronische Steuer- und Regeleinrichtung 7 angebunden werden.

Ausführungsbeispiel 4:

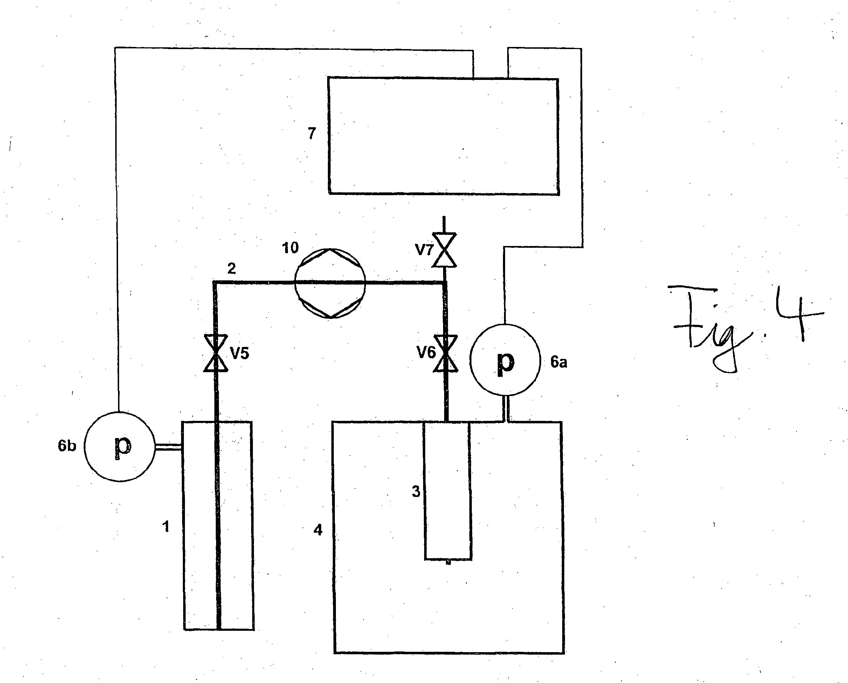

Figur 4 zeigt ein weiteres Ausführungsbeispiel der vorliegenden Erfindung. Die hier gezeigte Vorrichtung ist grundsätzlich ebenso wie die in Figur 1 gezeigte Vorrichtung aufgebaut, so dass nachfolgend nur die Unterschiede beschrieben werden.

Das Vorratsgefäß 1 ist mit einem Druckaufnehmer 6b verbunden; der Dosierraum 4 mit einem weiteren Druckaufnehmer 6a (analog wie bei den vorhergehenden beiden Beispielen). Die Druckaufnehmer sind wiederum mit der Steuereinheit 7 verbunden. Die Steuereinheit 7 regelt nun jedoch wie nachfolgend noch näher beschrieben eine Flüssigkeitspumpe 10, welche in der Flüssigkeitsleitung 2 zwischen Vorratsgefäß 1 und Dosierkopf 3 angebracht ist. Zwischen Flüssigkeitspumpe 10 und Dosierkopf 3 befindet sich in besagter Leitung eine Absperrvorrichtung V6 in Form eines Ventils. Eine weitere Absperrvorrichtung V5 in Form eines Ventils befindet sich in dem Leitungsstück zwischen Vorratsgefäß 1 und der Dosierpumpe 10. Im Bereich zwischen der Dosierpumpe 10 und dem Absperrventil V6 ist die Leitung 2 darüberhinaus mit einem Überdruckventil V7 versehen.

In diesem gezeigten Fall wird somit eine Flüssigkeitspumpe 10 zur Kontrolle der vorstehend beschriebenen Druckereignisse verwendet. Die Flüssigkeitspumpe ist hierbei in der Lage, die Flüssigkeit in zwei Richtungen, also vom Dosierkopf zum Vorratsgefäß und in umgekehrter Richtung zu bewegen. Alternativ können auch zwei Flüssigkeitspumpen verwendet werden, wobei dann die erste Flüssigkeitspumpe die Flüssigkeit in Richtung Dosierkopf befördert und die zweite Flüssigkeitspumpe die Flüssigkeit vom Dosierkopf weg befördert. Für eine entsprechende Abstimmung der Flüssigkeitspumpen ist dann zu sorgen. Die Flüssigkeitspumpe bzw. die Flüssigkeitspumpenanordnung (aus den beiden Flüssigkeitspumpen) muss in der Lage sein, einen geringen Überdruck zu halten, ggf. aber auch einen ausreichend hohen Fluss zum Dosierkopf hin oder vom Dosierkopf weg zu erzeugen. Um kurzfristig auftretende Druckschwankungen im Dosierraum 4 zu kompensieren, kann entweder die Flüssigkeitspumpe 10 (bzw. die Flüssigkeitspumpenanordnung) entsprechend dimensioniert werden, d.h. es muss ein ausreichend schnelles Umschalten der Flüssigkeitsfließrichtung möglich sein (die Dimensionierung erfolgt hierbei naturgemäß anhand des Leitungsdurchmessers der Leitung 2, der Volumina des Vorratsgefäßes 1 und des Dosierraums 4 sowie anhand der Ausgestaltung des Dosierkopfs 3) oder es wird, wie hier zusätzlich gezeigt, das Überdruckventil V7 zwischen der Flüssigkeitspumpe 10 und dem Dosierköpf 3 in die Flüssigkeitsleitung 2 integriert. Wird ein solches Überdruckventil V7 verwendet, ist sicherzustellen, dass es bei gewolltem Druckaufbau zwischen Flüssigkeitspumpe 10 und Dosierkopf 3 nicht auslöst. Das Überdruckventil V7 kann auch zwischen dem Vorratsgefäß 1 und der Pumpe 10 an der Leitung 2 angeordnet werden.

Um den Flüssigkeitsfluss zwischen Vorratsgefäß 1 und Dosierkopf 3 zu unterbrechen, sind hier die Absperrvorrichtungen V5 und V6 angeordnet. Darüberhinaus bietet sich (nicht gezeigt) die Integration einer Filtereinrichtung, z.B. einer Fritte, in die Flüssigkeitsleitung 2 an. Da die Leitung der Flüssigkeit im Dosierkopf 3 sehr dünnflüssig erfolgen muss, ist sie entsprechend anfällig für Verschmutzungen durch Feststoffpartikel. Diese können dann durch Einsatz einer solchen Filtereinrichtung abgeschieden werden und gelangen somit nicht in den Bereich kleiner Leitungsdurchmesser in der Nähe des bzw. im Dosierkopf. Die Verwendung einer Flüssigkeitspumpe bzw. Flüssigkeitspumpenanordnung 10 wie gezeigt ermöglicht es auch, anstelle eines einzelnen Vorratsgefäßes 1 eine Anordnung von mehreren Vorratsgefäßen mit einem Dosierkopf 3 zu verbinden, was je nach Anwendungsfall von Vorteil sein kann.

Auch mit der in diesem Beispiel gezeigten Vorrichtung kann der vorbeschriebene Spülvorgang automatisiert werden, indem der zuzudosierende Stoff in das Vorratsgefäß 1 zurückgepumpt wird, bis die Flüssigkeitsleitung 2 ausreichend geleert ist. Darauffolgend kann über eine geeignete Flüssigkeitsverteilungsanordnung aus einem Spülflüssigkeitsvorratsgefäß (nicht gezeigt) Spülflüssigkeit durch die Flüssigkeitsleitung 2 in den Dosierkopf gefördert werden. Durch erneutes Leerpumpen der Flüssigkeitsleitung kann dann auch die Spülflüssigkeit entfernt werden. Für eine komplette Entleerung der Flüssigkeitsleitung 2 kann es anschließend sinnvoll sein, einen Unterdruck an die Flüssigkeitsleitung 2 anzulegen, um letzte Reste der Spülflüssigkeit zu entfernen.

Die in den vorstehend gezeigten Ausführungsbeispielen 1 bis 4 beschriebenen Lösungen können auch in Kombination bzw. in einem gemeinsamen System zum Einsatz kommen.

Ausführungsbeispiel 5:

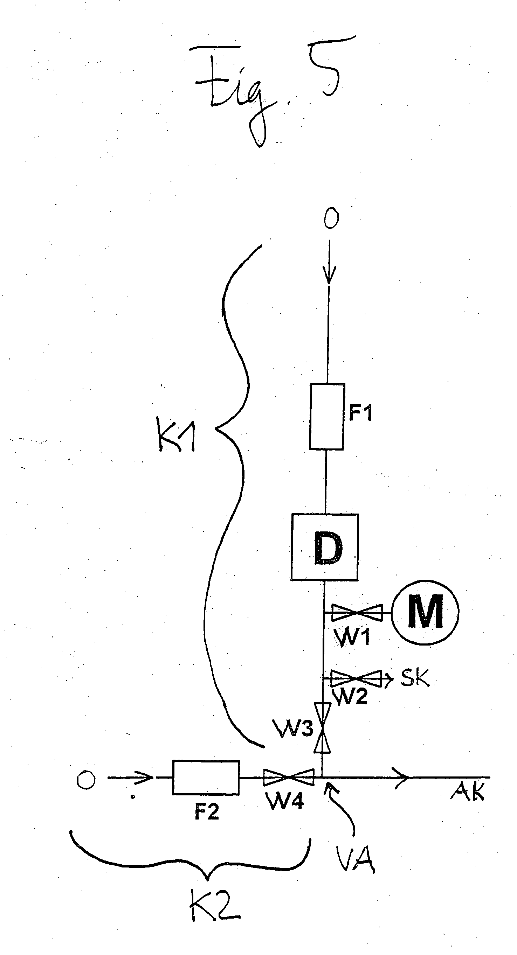

Figur 5 zeigt ein weiteres Ausführungsbeispiel einer Vorrichtung zum Zudosieren eines Stoffes in eine Trägermatrix. Die hier gezeigte Vorrichtung weist eine Trägermatrixquelle 0 auf, welche hier als Mehrfachversorgungseinheit so aufgebaut ist, dass sie aufgrund geeigneter Leitungs- und/oder Ventilführung beide nachfolgend noch näher beschriebenen Trägermatrix-Zufuhrkanäle K1 und K2 versorgt. Der Trägermatrix-Zufuhrkanal K1 weist hier in Strömungsrichtung gesehen zunächst eine erste Mess- und/oder Regeleinrichtung F1 auf. Dieser ist eine Dosiereinrichtung D stromabwärts nachgeschaltet, welche wie in einem der voranstehend beschriebenen Ausführungsbeispiele 1 bis 4 beschrieben ausgestaltet sein kann. Stromabwärtsseitig der Dosiereinrichtung D ist im ersten Trägermatrix-Zufuhrkanal K1 eine Konzentrationsmesseinheit M ausgebildet, mit der die Konzentration des Stoffes in der mittels der Vorrichtung D beladenen Trägermatrix erfasst werden kann. Diese Konzentrationsmesseinheit M ist über eine Absperrvorrichtung (Ventil) W1 mit dem stromabwärts der Dosiervorrichtung D angeordneten Teil des Zufuhrkanals K1 verbunden. Stromabwärts der Konzentrationsmesseinheit M führt über ein weiteres Ventil W2 ein Ausschusskanal SK aus dem Kanal K1, mit dem überschüssige, mit dem Stoff beladene Trägermatrix, welche nicht zur später noch beschriebenen Verwendung gedacht ist, aus dem ersten Zufuhrkanal K1 abgeführt werden kann. Schließlich weist der erste Zufuhrkanal K1 stromabwärtsseitig der ausmündenden Ausschusskanals SK eine weitere Absperrvorrichtung in Form eines Ventils W3 auf.

Die gezeigte Vorrichtung weist darüberhinaus einen zweiten Trägermatrix-Zufuhrkanal K2, welchem ebenfalls über die Trägermatrixquelle 0 Trägermatrix zuführbar ist, auf. Dieser zweite Zufuhrkanal K2 weist zunächst eine zweite Mess- und/oder Regeleinrichtung F2 ebenfalls zum Messen und/oder Regeln des Trägermatrixstroms (hier des durch den zweiten Trägermatrix-Zufuhrkanals K2 führenden Trägermatrixstroms) auf. Stromabwärtsseitig der Regeleinrichtung F2 ist im zweiten Trägermatrix-Zufuhrkanal K2 ebenfalls ein Ventil W4 angeordnet. Stromabwärtsseitig der Ventile W3 und W4 werden die beiden Trägermatrix-Zufuhrkanäle K1 und K2 in einer Vereinigungs- und Abführeinheit VA, AK zusammengeführt. Diese Vereinigungs- und Abführeinheit VA, AK besteht hier aus einem Vereinigungsabschnitt VA, in welchem die beiden Zufuhrkanäle vereinigt werden sowie aus einem stromabwärts davon angeordneten Leitungsabschnitt AK (Abführkanal), über den die zusammengeführten Trägermatrixströme einer nachgeschalteten Verwendungsvorrichtung (hier einer Prüfvorrichtung für katalytische und/oder ad/absorptive Systeme und/oder einer chemischen Analysevorrichtung) zugeführt werden. Im gezeigten Fall weist lediglich der Kanal K1 eine Dosiervorrichtung D auf; eine solche kann jedoch zusätzlich auch im Kanal K2 angeordnet sein.

Im gezeigten Fall wird, wie nun nachfolgend ausführlich beschrieben, in der erfindungsgemäßen Vorrichtung ein Verdünnungsschritt realisiert. Grundsätzlich besteht eine gemäß der vorliegenden Erfindung zur kontrollierten Beladung und Führung des Trägermatrixstroms ausgebildete Zudosiervorrichtung hinsichtlich ihrer Stromkonfiguration aus mindestens zwei Matrixstromeingangseinheiten (hier Kanal K1 und Kanal K2). Hierbei kann, wie im vorliegenden Fall gezeigt, die Trägermatrixquelle 0 für die beiden Matrixstromkanäle K1, K2, also für alle Eingänge, dieselbe sein, es ist aber auch möglich, je Kanal verschiedene, also getrennte Trägermatrixquellen zu verwenden. In jedem der beiden Matrixstromkanäle K1 und K2 ist eine geeignete Mess- und Regeleinrichtung F vorgesehen, mit der der Matrixfluss (insbesondere das Durchflussvolumen pro Zeiteinheit) erfasst und geregelt werden kann. Diese Einheiten F1 und F2 sind hier elektronisch betrieben, es sind jedoch auch manuelle Einrichtungen denkbar. Im vorliegenden Fall ist die Einrichtung F1 im ersten Kanal K1 stromaufwärtsseitig der Dosiervorrichtung D angeordnet, es ist jedoch auch denkbar, die Einrichtung F1 nach der Dosiervorrichtung D anzuordnen.

Mittels der Dosiervorrichtung D, welche wiederum als piezoelektrisch aktivierte Tröpfchenemissionseinheit ausgebildet ist, wird in den im Kanal K1 geführten Trägermatrixstrom der zuzudosierende Stoff zugegeben. Kurz danach erfolgt die Konzentrationsmessung von zudosiertem Stoff im Trägermatrixstrom des Kanals K1 mittels der Messvorrichtung M. Der Abstand zwischen Tröpfchenemissionspunkt bzw. Dosiervorrichtung D und Messvorrichtung M muss so kurz gewählt werden, dass möglichst geringe Verschmutzungseffekte in der Verbindungsleitung auftreten können, jedoch noch eine homogene Verteilung des zu dosierenden Stoffs in der Trägermatrix gewährleistet ist.

Um einen je nach Ausbildung der Messvorrichtung M evtl. notwendigen Fluss hin zur Messeinrichtung zu unterbinden oder zu reduzieren, ist im vorliegenden Fall eine Absperrvorrichtung in Form eines Ventils W1 zwischen Messvorrichtung und dem stromabwärts der Vorrichtung D befindlichen Teil des Kanals K1 angeordnet. Die Messeinrichtung M kann alternativ zur gezeigten Positionierung auch am Punkt der eigentlichen Verwendung des Systems platziert werden (also am Ausgang des Abführkanals AK). Unter Umständen herrschen dort jedoch so geringe Stoffkönzentrationen, dass diese mit der handelsüblichen Messtechnik nicht mehr erfassbar sind. Auch können dann zu hohe Konzentrationen erst am Ende des Systems erkannt werden und u.U. nicht rechtzeitig verhindert werden bzw. (über den Ausschusskanal SK) abgeleitet werden.

Möglichst kurz nach der Messeinheit M bzw. dem Ort der Tröpfchenemission D ist hier ein Leitungsweg SK zur Ableitung von nicht zur Verwendung vorgesehener Trägermatrix aus dem ersten Trägermatrix-Zufuhrkanal K1 angebracht. Der Abstand zwischen Tröpfchenemissionspunkt D und Ableitung SK muss hierbei so kurz wie möglich gewählt werden, um mögliche Verschmutzungseffekte in der Verbindungsleitung zu minimieren.

Um die Abluftleitung bzw. den Ausschusskanal SK nach Anforderung öffnen und schließen zu können, ist die Absperrvorrichtung (alternativ oder zusätzlich kann auch eine Regeleinrichtung vorgesehen sein) W2 angeordnet.

Darüberhinaus ist durch Vorsehen des weiteren Ventils W3 sichergestellt, dass nicht ungewollt beladener Trägermatrixstrom über den Kanal K1 in den Vereinigungsabschnitt VA bzw. den Abführkanal AK gelangt. Die weitere Absperr- und/oder Regeleinrichtung W3 trennt somit den beladenen und den unbeladenen (über den Trägermatrix-Zufuhrkanal K2 zugeführten) Trägermatrixstrom. Es ist auch möglich, die Absperr- und/oder Regeleinrichtungen bzw. Ventile W2, W3 und W4 für Abluft und zwischen beladenem und unbeladenem Trägermatrixstrom als eine einzige Absperr- und/oder Regeleinrichtung, beispielsweise in Form eines Dreiwegeventils, auszuführen. Hierbei ist zu beachten, dass der Trägermatrixstrom während des Schaltvorgangs kurz unterbrochen wird, was zu einem kurzzeitigen Druckanstieg am Punkt der Tröpfchenemission führt. Dies kann den Tröpfchenemissionsvorgang stören.

Um die oben beschriebenen Verschmutzungseffekte zu vermeiden, ist es neben dem Einsatz möglichst kurzer Leitungswege in den Kanälen K1 und K2 weiterhin sinnvoll (hier nicht gezeigt) die betreffenden Leitungswege zu beheizen (beispielsweise mittels einer Heizvorrichtung). Alternativ kann es hier jedoch auch ausreichend sein, die Temperatur des Trägermatrixstroms, welcher am Punkt der Tröpfchenemission D herrscht, in den folgenden Leitungen konstant zu halten. Dies kann beispielsweise durch Vorsehen einer temperaturisolierenden Umhüllung geschehen. Es ist dabei besonders darauf zu achten, dass die Leitungswandungen die Temperatur nicht unterschreiten. Dies kann beispielsweise durch eine ausreichend dicke Isolierschicht erreicht werden.

Durch mindestens eine weitere Leitung, hier den zweiten Trägermatrix-Züfuhrkanal K2 samt der darin angeordneten Einheiten, wird nun erfindungsgemäß dem beladenen Trägermatrixstrom des Kanals K1 mindestens ein weiterer, unbeladener Trägermatrixstrom zugeleitet (vgl. auch nachfolgendes Ausführungsbeispiel 6), was zu einer Verdünnung des beladenen Trägermatrixstroms entsprechend dem Verhältnis der beiden Volumenströme der Kanäle K1 und K2 führt. Zur Berechnung der Verdünnung ist es notwendig, den mittels des Kanals K2 zugeleiteten Trägermatrixvolumenstrom zu kennen und die Möglichkeit zu haben, diesen zu regeln. Hierfür ist im Kanal K2 eine geeignete Mess- und Regeleinrichtung F2 für den Matrixfluss vorgesehen. Auch diese kann elektronisch, manuell oder in Mischform betrieben werden, ebenso wie die Einrichtung F1. Um den Verdünnungsfluss wenn nötig unterbrechen oder regeln zu können, ist wie beschrieben die Absperr- und/oder Regeleinrichtung W4 in die Leitung K2 integriert. Die im Vereinigungsabschnitt VA zusammengeführten Trägermatrixströme der beiden Kanäle können, wenn die gewünschte Konzentration an zu dosierender Substanz korrekt eingestellt ist, dann der nachgeschalteten Anwendung über den Abführkanal AK zugeführt werden.

Ausführungsbeispiel 6:

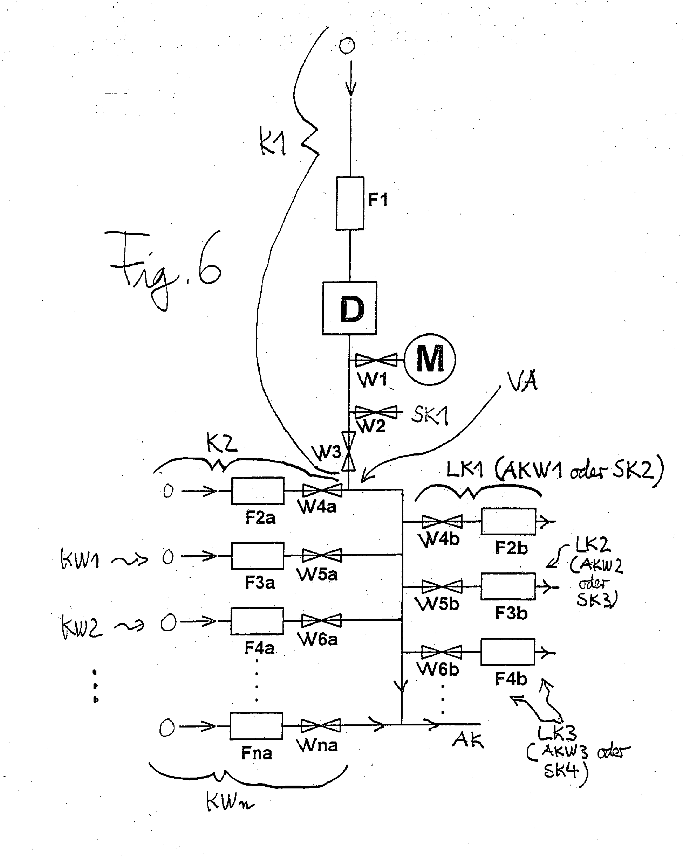

Figur 6 zeigt ein weiteres Ausführungsbeispiel einer Vorrichtung zum Zudosieren eines Stoffes in eine Trägermatrix, welches grundsätzlich ebenso wie das in Figur 5 gezeigte Ausführungsbeispiel ausgestaltet ist. Nachfolgend werden daher nur die Unterschiede beschrieben. Grundlegende Idee ist hierbei, das in Figur 5 vorgestellte System um weitere Verdünnungsschritte zu erweitern: Hierzu weist die Vereinigungs- und Abführeinheit VA, AK mehrere stromabwärts des Vereinigungsabschnitts VA und stromaufwärts des Abführkanals AK einmündende Einströmkanäle KWn (n=1, 2,...) auf. Jeder dieser Einströmkanäle KWn ist mit der Trägermatrixquelle 0 zur Zufuhr eines Trägermatrixstroms in den jeweiligen Einstromkanal verbunden. Darüberhinaus weist jeder dieser Einströmkanäle KWn jeweils eine Mess- und/oder Regeleinrichtung Fna (n=3, 4,...) und stromabwärts dieser Mess- und/oder Regeleinrichtung jeweils eine Absperreinheit (Ventil) Wna (n=5, 6,...) auf.

Ebenso weist das vorgestellte System mehrere stromabwärts des Vereinigungsabschnitts VA und stromaufwärts des Abführkanals AK ausmündende Ableitkanäle LKn (n=1, 2,...) auf. Über diese Ableitkanäle LKn ist jeweils ein Teil der bereits zusammengeführten Trägermatrixströme des ersten und des zweiten TrägermatrixZufuhrkanals sowie der ggf. vor dem jeweiligen Ableitkanal LK bereits eingemündeten Einströmkanäle ableitbar. Jeder dieser Ableitkanäle LKn weist jeweils eine Absperrvorrichtung (Ventil) Wnb (n=4, 5,...) sowie stromabwärts davon jeweils eine Mess- und/oder Regeleinrichtung Fnb (n=2, 3, 4,...) auf.

Die einmündenden Einströmkanäle KWn sowie die ausmündenden Ableitkanäle LKn sind jeweils abwechselnd angeordnet, im vorliegenden Fall folgt in stromabwärtiger Richtung nach dem Vereinigungsabschnitt VA zunächst ein erster Ableitkanal LK1, dann ein erster Einströmkanal KW1, dann ein zweiter Ableitkanal LK2 usw. Je nach Systemanforderungen kann ein solcher Ableitkanal LKn entweder als weiterer Abführkanal AKWn (n=1, 2,...) ausgebildet sein, über den die stromaufwärts bereits zusammengeführten Trägermatrixströme zumindest teilweise einer nachgeschalteten Verwendung (z.B. chemische Analysevorrichtung oder vorgenannte Prüfvorrichtung) zuführbar sind, oder als Ausschusskanal SKn (n=2, 3,...) ausgebildet sein, über den die stromaufwärts bereits zusammengeführten Trägermatrixströme zumindest teilweise abführbar sind, ohne einer nachgeschalteten Verwendung zugeführt zu werden.

Die in den Kanälen des vorstehend beschriebenen Systems eingesetzten Mess- und/oder Regeleinrichtungen F1, F2a (im ersten bzw. zweiten Trägermatrixzufuhrkanal K1 bzw. K2), F3a, F2b, F4a, F3b, ... sind dabei im vorliegenden Fall so ausgestaltet, dass mit ihnen die durch den jeweiligen Kanal fließenden Trägermatrix-Volumenströme erfassbar sind. Die jeweiligen Messergebnisse werden in einer hier nicht gezeigten zentralen Berechnungseinheit zusammengeführt, so dass sich mit hinreichender Genauigkeit die jeweils nach den einmündenden bzw. ausmündenden Kanälen resultierender Konzentrationen in der dann jeweils verdünnten Trägermatrix berechnen lassen. Anhand der berechneten Konzentrationen können dann wiederum über die Mess- und/oder Regeleinrichtungen der einzelnen Kanäle die zugeführten bzw. abgeführten Trägermatrixströme geregelt werden.

In dem gezeigten Beispiel ist somit das bezüglich Figur 5 vorgestellte Basissystem um mehrere Verdünnungsschritte erweitert: Dies hat den Vorteil, dass auch kleinste Konzentrationen an zuzudosiertem Stoff generiert werden können. Dabei wurde für jeden Verdünnungsmatrixstrom eine separate Absperr- und/oder Regeleinrichtung (W4a, W5a, W6a,...) integriert. Zur Berechnung der Verdünnung ist es wie beschrieben notwendig, den jeweils zugeleiteten (bzw. abgeleiteten) Trägermatrixvolumenstrom zu kennen und die Möglichkeit zu haben, diesen zu regeln. Hierfür sind die Mess- und/oder Regeleinrichtungen für den jeweiligen Matrixfluss vorgesehen. Nach jedem Verdünnungsschritt ist im vorgestellten Beispiel eine Ableitung von Trägermatrixstrom über die Kanäle LKn möglich. Auch diese Kanäle verfügen jeweils über separate Absperrvorrichtungen W4b, W5b, ... . Da über die Mess- und Regeleinrichtungen F2b, F3b, ... der jeweils abgeleitete Trägermatrixvolumenstrom erfassbar ist, ist es möglich, die stromabwärts des jeweiligen Ableitkanals LK vorliegende Verdünnung zu ermitteln und die einzelnen Ströme geeignet zu regeln. Wie bereits beschrieben, kann der jeweils abgeleitete Trägermatrixstrom entweder einer Verwendung zugeführt werden (Ausbildung des jeweiligen Ableitkanals LK als weiterer Abführkanal AKW) oder er kann auch ungenutzt abgeleitet werden (Ausbildung des jeweiligen Ableitkanals LK als Ausschusskanal SK).

Die in den vorstehenden Ausführungsbeispielen beschriebenen Prinzipien und Anwendungsformen können in vielen technischen Bereichen eingesetzt werden. Die Abstimmung der Einzelkomponenten erfolgt sinnvollerweise den jeweiligen Einsatzzwecken angepasst. Die Einzelkomponenten können getrennt voneinander manuell oder auch über getrennte Steuer- und Regeleinheiten bedient werden. Es ist auch möglich, das (beispielsweise in Figur 6) gezeigte Gesamtsystem in einem einzigen Mess- und Regelkreis zusammenzuführen, mit Hilfe dessen sich sämtliche verwendeten Mess- und/oder Regeleinrichtungen F, sämtliche Absperr- und/oder Regeleinrichtungen W bzw. V sowie die Dosiervorrichtung D und die Konzentrationsmesseinheit M steuern und regeln lassen. Vorteilhaft ist dabei die Möglichkeit der Automatisierung des Betriebs und der rechnergestützten Auswertung der erfassten Rohdaten.

## Patentansprüche

1. Vorrichtung zum Zudosieren eines Stoffes in eine Trägermatrix, umfassend
eine Trägermatrixquelle (0) zur Erzeugung und/oder Zufuhr einer Trägermatrix,
ein Vorratsgefäß (1) welches mit dem Stoff in bevorzugt flüssiger Form füllbar und/oder gefüllt ist,
eine Dosiereinheit (3, 4) umfassend einen stromabwärts der Trägermatrixquelle angeordneten Dosierraum (4) und einen stromabwärts des Vorratsgefäßes angeordneten, bevorzugt zur piezoelektrisch aktivierten Tröpfchenemission ausgebildeten Dosierkopf (3), wobei die Trägermatrix dem Dosierraum von der Trägermatrixquelle zuleitbar ist und wobei der Stoff dem Dosierkopf von dem Vorratsgefäß zuleitbar, über den Dosierkopf in den Dosierraum abgebbar und hierdurch der Trägermatrix zudosierbar ist,
***gekennzeichnet durch***
eine zur Regelung des Druckes im Vorratsgefäß (1) und/oder des Druckes in der Dosiereinheit ausgebildete Druckregelvorrichtung, die so ausgebildet ist, dass sie einen Druckausgleich zwischen dem Vorratsgefäß (1) und dem Dosierraum (4) ermöglicht.

2. Vorrichtung nach dem vorhergehenden Anspruch
***gekennzeichnet durch***
eine zur Regelung des im Vorratsgefäß in der Gasphase über dem zuzudosierenden Stoff herrschenden Druckes und/oder des im Dosierraum herrschenden Druckes und/oder der Druckdifferenz zwischen diesen beiden Drücken ausgebildete Druckregelvorrichtung, insbesondere eine zum Konstanthalten eines dieser beiden Drücke, dieser beiden Drücke und/oder dieser Druckdifferenz ausgebildete Druckregelvorrichtung.

3. Vorrichtung nach einem der vorhergehenden Ansprüche,
***dadurch gekennzeichnet, dass***
die Druckregelvorrichtung eine das Vorratsgefäß mit dem Dosierraum gasoffen verbindende Überleitung (Ü) aufweist.

4. Vorrichtung nach dem vorhergehenden Anspruch,
***dadurch gekennzeichnet, dass***
die Überleitung eine Stoffsperrvorrichtung (5) aufweist, mit welcher ein Gasaustausch zwischen dem Dosierraum und dem Vorratsgefäß möglich ist und mit welcher ein Übertritt des Stoffes zwischen dem Dosierraum und dem Vorratsgefäß verhinderbar ist, wobei vorzugsweise die Stoffsperrvorrichtung einen Wegabschnitt der Überleitung umfasst, welcher eine den Stoff adsorbierende und/oder absorbierende Substanz und/oder eine auf den Stoff katalytisch wirkende Substanz aufweist,
und/oder
die Stoffsperrvorrichtung eine Membran in der Überleitung umfasst,
und/oder
die Stoffsperrvorrichtung einen mit einer Flüssigkeit aufgefüllten Wegabschnitt der Überleitung umfasst, insbesondere einen als U-Rohr mit bevorzugt mindestens einem verdickten Ende ausgebildeten, flüssigkeitsgefüllten Wegabschnitt.

5. Vorrichtung nach einem der vorhergehenden Ansprüche,
***dadurch gekennzeichnet, dass***
die Druckregelvorrichtung mindestens einen mit dem Vorratsgefäß und/oder dem Dosierraum verbundenen Druckaufnehmer (6) zur Erfassung des Druckes im Vorratsgefäß und/oder im Dosierraum, eine mit dem Druckaufnehmer (6) verbundene Steuereinheit (7) und eine mit der Steuereinheit verbundene Stelleinheit (8, 10, 11, 12) aufweist, wobei mit der Steuereinheit in Abhängigkeit von dem im Vorratsgefäß und/oder im Dosierraum erfassten Druck über die Stelleinheit ein Druck im Vorratsgefäß und/oder ein Druck im Dosierraum einstellbar ist.

6. Vorrichtung nach dem vorhergehenden Anspruch,
***dadurch gekennzeichnet, dass***
die Stelleinheit eine mit einem Überdruck und/oder mit einem Unterdruck beaufschlagbare, mit dem Vorratsgefäß und/oder mit dem Dosierraum verbundene Druckzuleitung (11) aufweist.

7. Vorrichtung nach einem der zwei vorhergehenden Ansprüche,
***dadurch gekennzeichnet, dass***
die Stelleinheit eine mit dem Vorratsgefäß und/oder mit dem Dosierraum verbundene Pumpe (8p) und/oder einen mit dem Vorratsgefäß und/oder mit dem Dosierraum verbundenen Kolben (8k) aufweist.

8. Vorrichtung nach einem der drei vorhergehenden Ansprüche
***gekennzeichnet durch***
mindestens eine mit dem Vorratsgefäß (1) und dem Dosierkopf (3) verbundene Durchflussleitung (2), insbesondere eine Kapillarleitung, zum Leiten von zuzudosierendem Stoff vom Vorratsgefäß zum Dosierkopf, wobei die Stelleinheit mindestens eine an dieser Durchflussleitung angeordnete und/oder in diese Durchflussleitung integrierte Flüssigkeitspumpe (10) aufweist, welche zum Pumpen von zuzudosierendem Stoff vom Vorratsgefäß hin zum Dosierkopf und in umgekehrter Richtung ausgebildet ist, und bevorzugt eine erste und eine zweite Flüssigkeitspumpe aufweist, wobei die erste zum Pumpen von zuzudosierendem Stoff vom Vorratsgefäß hin zum Dosierkopf und die zweite zum Pumpen von zuzudosierendem Stoff in umgekehrter Richtung ausgebildet ist.

9. Vorrichtung nach einem der vorhergehenden Ansprüche
***gekennzeichnet durch***
eine zur Regelung des aus einem Niveauunterschied zwischen dem Flüssigkeitsniveau des zuzudosierenden Stoffes im Vorratsgefäß und dem Niveau des Austrittsortes des zuzudosierenden Stoffes im Dosierraum resultierenden Druckes ausgebildete Druckregelvorrichtung, insbesondere eine zum Konstanthalten dieses Niveauunterschiedes und/oder dieses Druckes ausgebildete Druckregelvorrichtung.

10. Vorrichtung nach dem vorhergehenden Anspruch,
***dadurch gekennzeichnet, dass***
die Druckregelvorrichtung eine zum Konstanthalten des Niveauunterschiedes ausgebildete mechanische Stellvorrichtung aufweist.

11. Vorrichtung nach einem der vorhergehenden Ansprüche,
***dadurch gekennzeichnet, dass***
die Druckregelvorrichtung eine Pumpe aufweist, bevorzugt eine in einer das Vorratsgefäß (1) mit dem Dosierkopf (3) verbindenden Durchflussleitung (2) angeordnete Pumpe, wobei die Pumpe so ausgebildet ist, dass durch sie der zuzudosierende Stoff am Austrittsort im Dosierkopf mit einem konstanten Druck beaufschlagbar ist.

12. Vorrichtung nach einem der vorhergehenden Ansprüche,
***dadurch gekennzeichnet, dass***
das Vorratsgefäß, insbesondere das untere Ende seines füllbaren und/oder gefüllten Innenraumes, in einer größeren Höhe angeordnet ist, als der Dosierkopf, insbesondere als dessen Abgabeort für den Stoff, und dass die Druckregelvorrichtung eine bevorzugt in einer das Vorratsgefäß (1) mit dem Dosierkopf (3) verbindenden Durchflussleitung (2) angeordnete Druckreduziereinheit aufweist, welche so ausgebildet ist, dass der durch den vorgenannten Höhenunterschied am zuzudosierenden Stoff an dessen Austrittsort im Dosierkopf resultierende Druck auf einen konstanten Druck, welcher kleiner als dieser resultierende Druck ist, reduzierbar ist.

13. Verfahren zum Zudosieren eines Stoffes in eine Trägermatrix, umfassend die Schritte
des Füllens eines Vorratsgefäßes (1) mit dem Stoff in bevorzugt flüssiger Form,
des Zuleitens einer Trägermatrix von einer Trägermatrixquelle (0) zu einem stromabwärts der Trägermatrixquelle angeordneten Dosierraum (4) einer Dosiereinheit (3, 4),
des Zuleitens des Stoffes von dem Vorratsgefäß zu einem stromabwärts des Vorratsgefäßes angeordneten Dosierkopf (3) der Dosiereinheit (3, 4) und
des Abgebens des Stoffes über den Dosierkopf und des Zudosierens des abgegebenen Stoffes in die Trägermatrix im Dosierraum,
*wobei*
der Druck im Vorratsgefäß und/oder der Druck in der Dosiereinheit geregelt wird, indem ein Druckausgleich zwischen dem Vorratsgefäß (1) und dem Dosierraum (4) vorgenommen wird.

## Claims

1. Device for metering a material into a carrier matrix, comprising
a carrier matrix source (0) for producing and/or supplying a carrier matrix,
a supply vessel (1) which can be filled and/or is filled with the material in preferably liquid form,
a metering unit (3, 4) comprising a metering chamber (4), which is disposed downstream of the carrier matrix source, and a metering head (3) which is disposed downstream of the supply vessel and configured preferably for piezoelectrically activated droplet emission, the carrier matrix being able to be supplied to the metering chamber from the carrier matrix source and the material being able to be supplied to the metering head from the supply vessel, being able to be emitted via the metering head into the metering chamber and consequently being able to be metered into the carrier matrix,
***characterised by***
a pressure control device which is configured to control the pressure in the supply vessel (1) and/or the pressure in the metering unit, said pressure control device being configured so as to enable a pressure equalization between the supply vessel (1) and the metering chamber (4).

2. Device according to the preceding claim,
***characterised by***
a pressure control device which is configured to control the pressure prevailing in the supply vessel in the gas phase above the material to be metered and/or the pressure prevailing in the metering chamber and/or the pressure difference between these two pressures, in particular a pressure control device which is configured to keep constant one of these two pressures, these two pressures and/or this pressure difference.

3. Device according to one of the preceding claims,
***characterised by***
the pressure control device has a transfer line (Ü) which connects the supply vessel to the metering chamber in an open gas manner.

4. Device according to the preceding claim,
***characterised in that***
the transfer line has a material shut-off device (5) with which a gas exchange between the metering chamber and the supply vessel is possible and with which passage of the material between the metering chamber and the supply vessel can be prevented, wherein preferably the material shut-off device comprises a path section of the transfer line which has a substance which adsorbs and/or absorbs the material and/or a substance which acts catalytically on the material,
and/or
the shut-off device comprises a membrane in the transfer line,
and/or
the material shut-off device comprises a path section of the transfer line filled with a liquid, in particular a liquid-filled path section which is configured as a U-pipe with preferably at least one thickened end.

5. Device according to one of the preceding claims,
***characterised in that***
the pressure control device has at least one pressure sensor (6), which is connected to the supply vessel and/or to the metering chamber, for detecting the pressure in the supply vessel and/or in the metering chamber, a control unit (7) connected to the pressure sensor (6) and an adjustment unit (8, 10, 11, 12) connected to the control unit, a pressure in the supply vessel and/or a pressure in the metering chamber being able to be adjusted with the control unit as a function of the pressure detected in the supply vessel and/or in the metering chamber via the adjustment unit.

6. Device according to the preceding claim,
***characterised in that***
the adjustment unit has a pressure supply line (11) which can be supplied with a high pressure and/or with a low pressure and is connected to the supply vessel and/or to the metering chamber.

7. Device according to one of the two preceding claims, ***characterised in that***
the adjustment unit has a pump (8p) connected to the supply vessel and/or to the metering chamber and/or a piston (8k) connected to the supply vessel and/or to the metering chamber.

8. Device according to one of the three preceding claims,
***characterised by***
at least one throughflow line (2) connected to the supply vessel (1) and to the metering head (3), in particular a capillary line, for conducting material to be metered from the supply vessel to the metering head, the adjustment unit having at least one liquid pump (10) which is disposed on this throughflow line and/or integrated in this throughflow line, which liquid pump is configured to pump material to be metered from the supply vessel to the metering head and in the reverse direction and preferably comprising a first and a second liquid pump, the first being configured to pump material to be metered from the supply vessel to the metering head and the second to pump material to be metered in the reverse direction.

9. Device according to one of the preceding claims,
***characterised by***
a pressure control device which is configured to control the pressure resulting from a difference in level between the liquid level of the material to be metered in the supply vessel and the level of the outlet location of the material to be metered in the metering space, in particular a pressure control device which is configured to keep this level difference and/or this pressure constant.

10. Device according to the preceding claim,
***characterised in that***
the pressure control device has a mechanical adjustment device which is configured to keep the difference in level constant.

11. Device according to one of the preceding claims,
***characterised in that***
the pressure control device has a pump, preferably a pump which is disposed in a throughflow line (2) connecting the supply vessel (1) to the metering head (3), the pump being configured such that, by means of it, the material to be metered can be supplied at the outlet location in the metering head with a constant pressure.

12. Device according to one of the preceding claims,
***characterised in that***
the supply vessel, in particular the lower end of its fillable and/or filled interior, is disposed at a greater height than the metering head, in particular than the emission location thereof for the material, and **in that** the pressure control device has a pressure reducing unit which is disposed preferably in a throughflow line (2) connecting the supply vessel (1) to the metering head (3), which pressure reducing unit is configured such that the pressure resulting due to the above-mentioned difference in height on the material to be metered at the outlet location thereof in the metering head can be reduced to a constant pressure which is less than this resulting pressure.

13. Method for metering a material into a carrier matrix, comprising the steps
of filling a supply vessel (1) with the material in preferably liquid form,
of conducting a carrier matrix from a carrier matrix source (0) to a metering chamber (4) of a metering unit (3, 4) which is disposed downstream of the carrier matrix source,
of conducting the material from the supply vessel to a metering head (3) of the metering unit (3, 4) which is disposed downstream of the supply vessel and
of emitting the material via the metering head and of metering the emitted material into the carrier matrix in the metering chamber,
***characterised in that***
the pressure in the supply vessel and/or the pressure in the metering unit is controlled by doing a pressure equalization between the supply (1) and the metering chamber (4).

## Revendications

1. Dispositif de dosage d'une matière dans une matrice porteuse, comprenant une source de matrice porteuse (0) pour la production et/ou pour l'amenée d'une matrice porteuse,
un réservoir (1) qui peut être rempli et/ou qui est rempli avec la matière, de préférence sous forme liquide,
une unité de dosage (3, 4) comprenant un espace de dosage (4) disposé en aval de la source de matrice porteuse et une tête de dosage (3) disposée en aval du réservoir, constituée de préférence pour l'émission de gouttelettes activées par voie piézo-électrique, la matrice porteuse pouvant être transportée vers l'espace de dosage à partir de la source de matrice porteuse, et la matière pouvant être transportée vers la tête de dosage à partir du réservoir, pouvant être délivrée dans l'espace de dosage par le biais de la tête de dosage et la matrice porteuse pouvant de ce fait être dosée,
***caractérisé par***
un dispositif de régulation de pression, constitué pour la régulation de la pression dans le réservoir (1) et/ou de la pression dans l'unité de dosage, qui est constitué de telle sorte qu'il permet un équilibrage de pression entre le réservoir (1) et l'espace de dosage (4).

2. Dispositif selon la revendication précédente,
***caractérisé par***
un dispositif de régulation de pression pour la régulation de la pression régnant dans le réservoir dans la phase gazeuse au-dessus la matière à doser et/ou de la pression régnant dans l'espace de dosage et/ou de la différence de pression entre ces deux pressions, en particulier un dispositif de régulation de pression pour le maintien à une valeur constante d'une de ces deux pressions, de ces deux pressions et/ou de cette différence de pression.

3. Dispositif selon l'une des revendications précédentes,
***caractérisé en ce que***
le dispositif de régulation de pression présente une liaison (Ü) ouverte au gaz raccordant le réservoir à l'espace de dosage.

4. Dispositif selon la revendication précédente,
***caractérisé en ce que***
la liaison présente un dispositif de blocage de matière (5) avec lequel un échange de gaz est possible entre l'espace de dosage et le réservoir, et avec lequel un déplacement de la matière entre l'espace de dosage et le réservoir peut être empêché, le dispositif de blocage de matière comprenant de préférence un tronçon de chemin de la liaison qui présente une substance adsorbant et/ou absorbant la matière et/ou une substance agissant par voie catalytique sur la matière,
et/ou
le dispositif de blocage de matière comprend une membrane dans la liaison, et/ou
le dispositif de blocage de matière comprend un tronçon de chemin de la liaison rempli d'un liquide, en particulier un tronçon de chemin rempli de liquide, constitué en tant que tube en U, avec de préférence au moins une extrémité épaissie.

5. Dispositif selon l'une des revendications précédentes,
***caractérisé en ce que***
le dispositif de régulation de pression comprend au moins un capteur de pression (6) raccordé au réservoir et/ou à l'espace de dosage pour mesurer la pression dans le réservoir et/ou dans l'espace de dosage, une unité de commande (7) raccordée au capteur de pression (6) et une unité de réglage (8, 10, 11, 12) raccordée à l'unité de commande, une pression dans le réservoir et/ou une pression dans l'espace de dosage pouvant être réglée avec l'unité de commande en fonction de la pression mesurée dans le réservoir et/ou dans l'espace de dosage.

6. Dispositif selon la revendication précédente,
***caractérisé en ce que***
l'unité de réglage présente une conduite d'alimentation en pression (11) pouvant être alimentée avec une surpression et/ou une dépression, et raccordée au réservoir et/ou à l'espace de dosage.

7. Dispositif selon l'une des deux revendications précédentes,
***caractérisé en ce que***
l'unité de réglage présente une pompe (8p) raccordée au réservoir et/ou à l'espace de dosage, et/ou un piston (8k) raccordé au réservoir et/ou à l'espace de dosage.

8. Dispositif selon l'une des trois revendications précédentes,
***caractérisé par***
au moins une conduite d'écoulement (2) raccordée au réservoir (1) et/ou à la tête de dosage (3), en particulier une conduite capillaire, pour conduire la matière à doser du réservoir à la tête de dosage, l'unité de réglage présentant au moins une pompe à liquide (10), disposée sur cette conduite d'écoulement et/ou intégrée dans cette conduite d'écoulement, qui est constituée pour le pompage de la matière à doser à partir du réservoir vers la tête de dosage et inversement, et présente de préférence une première et une deuxième pompe à liquide, la première étant constituée pour le pompage de la matière à doser à partir du réservoir vers la tête de dosage, et la deuxième étant constituée pour le pompage de la matière à doser en sens inverse.

9. Dispositif selon l'une des revendications précédentes,
***caractérisé par***
un dispositif de régulation de pression constitué pour la régulation de la pression résultant d'une différence de niveau entre le niveau de liquide de la matière à doser dans le réservoir et le niveau du lieu de sortie de la matière à doser dans l'espace de dosage, en particulier un dispositif de régulation de pression constitué pour le maintien à une valeur constante de cette différence de niveau et/ou de cette pression.

10. Dispositif selon la revendication précédente,
***caractérisé en ce que***
le dispositif de régulation de pression présente un dispositif de réglage mécanique constitué pour le maintien à une valeur constante de la différence de niveau.

11. Dispositif selon l'une des revendications précédentes,
***caractérisé en ce que***
le dispositif de régulation de pression présente une pompe, de préférence une pompe disposée dans une conduite d'écoulement (2) raccordant le réservoir (1) à la tête de dosage (3), la pompe étant constituée de telle sorte que, par son action, la matière à doser peut, à l'emplacement de sortie dans la tête de dosage, être alimentée avec une pression constante.

12. Dispositif selon l'une des revendications précédentes,
***caractérisé en ce que***
le réservoir, en particulier l'extrémité inférieure de son espace intérieur pouvant être rempli et/ou rempli, est disposé à une hauteur plus élevée que la tête de dosage, en particulier que son lieu de délivrance de la matière, et **en ce que** le dispositif de régulation de pression présente une unité de réduction de pression disposée de préférence dans une conduite d'écoulement (2) raccordant le réservoir (1) à la tête de dosage (3), unité de réduction de pression qui est constituée de telle sorte que la pression, résultant de la différence de hauteur précitée, sur la matière à doser à son emplacement de sortie dans la tête de dosage peut être réduite à une pression constante qui est plus faible que cette pression résultante.

13. Procédé de dosage d'une matière dans une matrice porteuse, comprenant les étapes suivantes :
remplissage d'un réservoir (1) avec la matière, de préférence sous forme liquide,
transport d'une matrice porteuse en provenance d'une source de matrice porteuse (0) vers un espace de dosage (4) d'une unité de dosage (3, 4) disposé en aval de la source de matrice porteuse,
transport de la matière à partir du réservoir vers une tête de dosage (3) de l'unité de dosage (3, 4) disposée en aval du réservoir, et
délivrance de la matière par le biais de la tête de dosage et dosage de la matière délivrée dans la matrice porteuse dans l'espace de dosage,
la pression dans le réservoir et/ou la pression dans l'unité de dosage étant régulée par le fait qu'un équilibrage de pression est réalisé entre le réservoir (1) et l'espace de dosage (4).
